# EUROPEAN PATENT APPLICATION

(11) **EP 4 827 161 A1**
(43) Date of publication of application: **21.10.2026**
(21) Application number: 25738329.9
(22) Date of filing: 03.01.2025
(51) Int. Cl.: H04W 24/10

(54) **CHANNEL STATE INFORMATION REPORTING METHOD AND COMMUNICATION APPARATUS**

(30) Priority: 08.01.2024 CN 202410033028
(71) Applicant: Huawei Technologies Co., Ltd., Shenzhen, Guangdong 518129 (CN)
(72) Inventor: YUAN, Yiling, Shenzhen, Guangdong 518129 (CN); GAO, Junhui, Shenzhen, Guangdong 518129 (CN); YE, Chencheng, Shenzhen, Guangdong 518129 (CN); WANG, Xiaohan, Shenzhen, Guangdong 518129 (CN)
(74) Representative: Gill Jennings & Every LLP
(86) International application number: PCT/CN2025/070435
(87) International publication number: WO 2025/148798

(57) **Abstract**

This application provides a channel state information reporting method and a communication apparatus, to report channel state information based on correlation between basis vectors at different moments. The method includes: A first apparatus receives a reference signal and sends first indication information, to indicate at least part of a plurality of first weighting coefficients associated with each first basis vector in a first basis and each second basis vector in a second basis. The first basis and the second basis correspond to different moments, and each first weighting coefficient corresponds to one priority. The priority of the first weighting coefficient is determined based on one or more of the following: a quantity *M* of first basis vectors, a quantity of second basis vectors, an index of an (*i* + 1)^{th} first basis vector, or an index of a (*j* + 1)^{th} second basis vector, where 0 ≤ *i < M,* 0 ≤ *i* < (1), and *i, j, M* and (1) all are integers.

## Description

This application claims priority to Chinese Patent Application No. 202410033028.9, filed with the China National Intellectual Property Administration on January 8, 2024 and entitled "CHANNEL STATE INFORMATION REPORTING METHOD AND COMMUNICATION APPARATUS", which is incorporated herein by reference in its entirety.

### TECHNICAL FIELD

This application relates to the field of communication technologies, and in particular, to a channel state information reporting method and a communication apparatus.

### BACKGROUND

In a communication system employing multiple-input multiple-output (multiple-input multiple-output, MIMO) for communication, during channel state information reporting, a first apparatus, for example, a terminal, may report at least one basis vector, for example, a spatial-domain basis vector, a frequency-domain basis vector, or a spatial-frequency-domain basis vector (which may also be referred to as a spatial-frequency basis vector). Basis vectors at different moments are separately reported, that is, reporting procedures of the basis vectors at the different moments are independent of each other, and the basis vector at each moment may be reported based on a priority, thereby implementing channel state information reporting.

In some possible implementation solutions, the first apparatus may report channel state information based on correlation between basis vectors at different moments. For example, the first apparatus may report a difference between basis vectors at two moments. In this case, the reported information is related to the basis vectors at the two moments, and the first apparatus does not directly report the basis vectors. Consequently, the foregoing solution of reporting channel state information based on a priority corresponding to a basis vector is not applicable. Therefore, how to report channel state information based on correlation between basis vectors at different moments is an urgent problem to be resolved.

### SUMMARY

Embodiments of this application provide a channel state information reporting method and a communication apparatus, to report channel state information based on correlation between basis vectors reported at different moments.

To achieve the foregoing objective, this application uses the following technical solutions.

According to a first aspect, a channel state information reporting method is provided. The channel state information reporting method includes: A first apparatus receives a reference signal from a second apparatus. The first apparatus sends first indication information to the second apparatus. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the first apparatus at a second moment, and the second moment is earlier than the first moment. Each of the at least part of first weighting coefficients corresponds to one priority. A priority of a first weighting coefficient on a (*j* + 1)^{th} second basis vector in the second basis that is associated with an (*i* + 1)^{th} first basis vector in the first basis is determined based on one or more of the following: a total quantity *M* of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, where 0 ≤ *i < M,* 0 ≤ *j < M̃, M̃ ≤* M, and *M*, *M̃, i* and *j* all are integers.

Based on the method provided in the first aspect, the first apparatus may receive the reference signal and send the first indication information, to indicate the at least part of first weighting coefficients, that is, indicate basis vectors at different moments, for example, coefficients of correlation between the first basis vector and the second basis vector. Each of the at least part of first weighting coefficients corresponds to one priority, and the priority of the first weighting coefficient on the (*j* + 1)^{th} second basis vector in the second basis that is associated with the (*i* + 1)^{th} first basis vector in the first basis is determined based on one or more of the following: the total quantity of first basis vectors in the first basis, the quantity of second basis vectors in the second basis, the index of the (*i* + 1)^{th} first basis vector in the first basis, or the index of the (*j +* 1)^{th} second basis vector in the second basis. Therefore, the first apparatus may report the channel state information based on the priorities of the plurality of first weighting coefficients. The first weighting coefficients are association coefficients between basis vectors at different moments, and therefore may indicate correlation between the basis vectors at the different moments. In this way, the channel state information may be reported based on the correlation between the basis vectors at the different moments, for example, the first basis vector and the second basis vector.

It should be understood that the at least part of first weighting coefficients are determined based on the priorities of the plurality of first weighting coefficients. A priority corresponding to one first weighting coefficient is used to report the first weighting coefficient. In addition, the first apparatus is a channel state information reporting apparatus, for example, a terminal. The index of the (*i* + 1)^{th} first basis vector may be *i* or *i +* 1. The index of the (*j* + 1)^{th} second basis vector may be *j* or *j +* 1.

According to a second aspect, a channel state information reporting method is provided. The channel state information reporting method includes: A second apparatus sends a reference signal. The second apparatus receives first indication information from a first apparatus. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the first apparatus at a second moment, and the second moment is earlier than the first moment. Each of the at least part of first weighting coefficients corresponds to one priority. A priority of a first weighting coefficient on a (*j* + 1)^{th} second basis vector in the second basis that is associated with an (*i* + 1)^{th} first basis vector in the first basis is determined based on one or more of the following: a total quantity M of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, where 0 ≤ *i < M,* 0 ≤ *j < M̃*, *M̃* ≤ *M*, and *M, M̃*, *i* and *j* all are integers. The second apparatus determines the first basis based on the first indication information.

Based on the method provided in the second aspect, the second apparatus receives the first indication information from the first apparatus and determines the first basis based on the first indication information. The first indication information indicates the at least part of first weighting coefficients, that is, indicates basis vectors at different moments, for example, coefficients of correlation between the first basis vector and the second basis vector. Each of the at least part of first weighting coefficients corresponds to one priority, and a priority of a first weighting coefficient on a (*j* + 1)^{th} second basis vector in the second basis that is associated with an (*i +* 1)^{th} first basis vector in the first basis is determined based on one or more of the following: the total quantity of first basis vectors in the first basis, the quantity of second basis vectors in the second basis, the index of the (*i* + 1)^{th} first basis vector in the first basis, or the index of the (*j* + 1)^{th} second basis vector in the second basis. In other words, the first apparatus may report channel state information based on priorities of the plurality of first weighting coefficients. The first weighting coefficients are association coefficients between basis vectors at different moments, and therefore may indicate correlation between the basis vectors at the different moments. In this way, the channel state information may be reported based on the correlation between the basis vectors at the different moments, for example, the first basis vector and the second basis vector.

It should be understood that the second apparatus may be a channel state information receiving device, for example, a network device.

With reference to the methods provided in the first aspect and the second aspect, in a possible implementation solution, the priority of the first weighting coefficient on the (*j* + 1)^{th} second basis vector in the second basis that is associated with the (*i* + 1)^{th} first basis vector in the first basis is negatively correlated with a priority value of the first weighting coefficient on the (*j* + 1)^{th} second basis vector in the second basis that is associated with the (*i* + 1)^{th} first basis vector in the first basis. The priority value of the first weighting coefficient on the (*j* + 1)^{th} second basis vector in the second basis that is associated with the (*i* + 1)^{th} first basis vector in the first basis satisfies one of the following relationships: *Pri*(*i, j*) *= M̃i + f*(*j*); or *Pri*(*i, j*) *= M̃i*² *+ f*(*j*), where *Pri*(*i, j*) represents the priority value of the first weighting coefficient on the (*j* + 1)^{th} second basis vector in the second basis that is associated with the (*i* + 1)^{th} first basis vector in the first basis, and *f*(*j*) increases or decreases with *j.* In this way, a priority is calculated for each first weighting coefficient, and the first weighting coefficient may be reported based on the priority. For example, if *f*(*j*) increases *with j,* when importance and index values of the second basis vector are negatively correlated, information that is more important to the channel state information may be preferentially reported; or if *f*(*j*) decreases with *j*, when importance and index values of the second basis vector are positively correlated, information that is more important to the channel state information may be preferentially reported. This can improve accuracy of the reported channel state information. In addition, different priority calculation manners may be matched based on a relationship between importance of different basis vectors and indexes of the basis vectors, thereby improving applicability.

In a possible implementation solution, the first indication information further indicates at least part of a plurality of second weighting coefficients and a third basis, and the second basis, the first weighting coefficients corresponding to the second basis, the third basis, and the at least part of second weighting coefficients are used to determine the first basis. This can make information in the first indication information more complete, thereby improving accuracy of the reported channel state information.

In a possible implementation solution, a priority of each of the second weighting coefficients is lower than a priority of any first weighting coefficient. In this way, information that is more important to the channel state information may be preferentially reported, thereby improving accuracy of the reported channel state information.

In a possible implementation solution, a priority of a second weighting coefficient on a (*k* + 1)^{th} third basis vector in the third basis that is associated with a first vector corresponding to the (*i* + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector includes a difference between the (*i* + 1)^{th} first basis vector and a projection of the (*i +* 1)^{th} first basis vector on the second basis, and *k* is an integer. In this way, a priority is calculated for each second weighting coefficient, and the second weighting coefficient may be reported based on the priority. For example, information that is more important to the channel state information may be preferentially reported, so that accuracy of the reported channel state information can be improved.

In a possible implementation solution, the priority of the second weighting coefficient on the (*k* + 1)^{th} third basis vector in the third basis that is associated with the first vector corresponding to the (*i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the (*k* + 1)^{th} third basis vector in the third basis that is associated with the first vector corresponding to the (*i* + 1)^{th} first basis vector in the first basis satisfies the following relationship: *Pri*(*i, k*) *= K*1*ϕ*(*i*) *+ f'*(*k*)*,* where *Pri*(*i, k*) represents the priority value of the second weighting coefficient on the (*k +* 1)^{th} third basis vector in the third basis that is associated with the first vector corresponding to the (*i +* 1)^{th} first basis vector in the first basis, *K*1 is the total quantity of third basis vectors in the third basis, *ϕ*(*i*) increases or decreases with *i, f'*(*k*) increases or decreases with *k,* 0 ≤ *i < M,* 0 ≤ *k* < *K*1*,* and *K*1 is an integer. In this way, a priority is calculated for each second weighting coefficient, and the second weighting coefficient may be reported based on the priority. For example, if *ϕ*(*i*) increases with *i* and *f'*(*k*) increases with *k,* when importance of the first basis vector is negatively correlated with an index of the first basis vector and importance of the third basis vector is negatively correlated with an index of the third basis vector, information that is more important to the channel state information may be preferentially reported; if *ϕ*(*i*) increases with *i* and *f'*(*k*) decreases with *k,* when importance of the first basis vector is negatively correlated with an index of the first basis vector and importance of the third basis vector is positively correlated with an index of the third basis vector, information that is more important to the channel state information may be preferentially reported; if *ϕ*(*i*) decreases with i and *f'(k)* increases with *k,* when importance of the first basis vector is positively correlated with an index of the first basis vector and importance of the third basis vector is negatively correlated with an index of the third basis vector, information that is more important to the channel state information may be preferentially reported; or if *ϕ*(*i*) decreases with *i* and *f'*(*k*) decreases with *k,* when importance of the first basis vector is positively correlated with an index of the first basis vector and importance of the third basis vector is positively correlated with an index of the third basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

In a possible implementation solution, the first basis vector is a spatial-domain basis vector, and the second basis vector is a spatial-domain basis vector; or the first basis vector is a frequency-domain basis vector, and the second basis vector is a frequency-domain basis vector. When the first basis vector is a spatial-domain basis vector, and the second basis vector is a spatial-domain basis vector, a spatial-domain basis may be indicated. When the first basis vector is a frequency-domain basis vector, and the second basis vector is a frequency-domain basis vector, a frequency-domain basis vector may be indicated.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient. The first vector corresponding to the (*i +* 1)^{th} first basis vector includes a difference between the (*i* + 1)^{th} first basis vector and a projection of the (*i* + 1)^{th} first basis vector on the second basis, and both s and *f* are integers. In this way, a priority is calculated for each second weighting coefficient, and the second weighting coefficient may be reported based on the priority. For example, information that is more important to the channel state information may be preferentially reported, so that accuracy of the reported channel state information can be improved.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (i + 1)^{th} first basis vector in the first basis satisfies the following relationship: *Pri*(*s,f, i*) *= LMπ*(*f*) *+ Lϕ*(*i*) + s, where *Pri*(*s, f, i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f, ϕ*(*i*) increases or decreases with *i,* 0 ≤ *f < F, F* is the total quantity of frequency-domain basis vectors corresponding to the third basis, 0 ≤ s *< L,* and both *L* and *F* are integers. In this way, a priority is calculated for each second weighting coefficient, and the second weighting coefficient may be reported based on the priority. For example, if *ϕ*(*i*) increases with *i*, when importance of the first basis vector is negatively correlated with an index of the first basis vector, information that is more important to the channel state information may be preferentially reported; or if *ϕ*(*i*) decreases with i, when importance of the first basis vector is positively correlated with an index of the first basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis. The first vector corresponding to the (*i* + 1)^{th} first basis vector includes a difference between the (*i* + 1)^{th} first basis vector and a projection of the (*i* + 1)^{th} first basis vector on the second basis, and both *s a*nd *f* are integers. In this way, a priority is calculated for each second weighting coefficient, and the second weighting coefficient may be reported based on the priority. For example, information that is more important to the channel state information may be preferentially reported, so that accuracy of the reported channel state information can be improved.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri*(*s, f, i*) *= LFϕ*(*i*) *+ Lπ*(*f*) *+* s, where *Pri*(*s, f, i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the quantity of spatial-domain basis vectors corresponding to the third basis, *π*(*f*) is a function of *f, ϕ*(*i*) increases or decreases with i, 0 ≤ *f < F, F* is the total quantity of frequency-domain basis vectors corresponding to the third basis, 0 ≤ *s* < *L*, and both *L* and *F* are integers. In this way, a priority is calculated for each second weighting coefficient, and the second weighting coefficient may be reported based on the priority. For example, if *ϕ*(*i*) increases with *i*, when importance of the first basis vector is negatively correlated with an index of the first basis vector, information that is more important to the channel state information may be preferentially reported; or if *ϕ*(*i*) decreases with *i,* when importance of the first basis vector is positively correlated with an index of the first basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

In a possible implementation solution, the first basis vector is a spatial-frequency basis vector, and the second basis vector is a spatial-frequency basis vector. This can implement spatial-frequency basis vector reporting.

According to a third aspect, a channel state information reporting method is provided. The channel state information reporting method includes: A first apparatus receives a reference signal from a second apparatus. The first apparatus sends second indication information to the second apparatus. The second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1 )^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G, 1* ≤ *l* ≤ *v, v* represents the quantity of transport layers reported by the first apparatus or the quantity of antenna ports of the first apparatus, and *g, l* and v all are integers.

Based on the method provided in the third aspect, the first apparatus may receive the reference signal and send the second indication information, to indicate quantization information of a superposition coefficient difference, that is, quantization information of a difference between first superposition coefficients corresponding to a spatial-frequency basis at different moments. The quantization information in the second indication information is determined based on a priority corresponding to each piece of quantization information, and the priority of each piece of quantization information is related to *G* and the quantity of transport layers reported by the first apparatus or the quantity of antenna ports of the first apparatus. In this way, the first apparatus may report the quantization information based on the priority of the quantization information of the superposition coefficient difference, that is, report channel state information based on a relationship between first superposition coefficients at different moments.

According to a fourth aspect, a channel state information reporting method is provided. The channel state information reporting method includes: A second apparatus sends a reference signal to a first apparatus. The second apparatus receives second indication information from the first apparatus. The second indication information is determined by the first apparatus based on the reference signal, the second indication information indicates at least part of quantization information of a plurality of superposition coefficient differences based on G fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1 )^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g, l* and *v* all are integers. The second apparatus determines the plurality of superposition coefficient differences based on the second indication information.

Based on the method provided in the fourth aspect, the second apparatus may send the reference signal and receive the second indication information, to determine the plurality of superposition coefficient differences based on the second indication information. The second indication information indicates quantization information of a superposition coefficient difference, that is, quantization information of a difference between first superposition coefficients corresponding to a spatial-frequency basis at different moments. The quantization information in the second indication information is determined based on a priority corresponding to each piece of quantization information, and the priority of each piece of quantization information is related to *G* and the quantity of transport layers reported by the first apparatus or the quantity of antenna ports of the first apparatus. In other words, the first apparatus may report the quantization information to the second apparatus based on the priority of the quantization information of the superposition coefficient difference, that is, report channel state information based on a relationship between first superposition coefficients at different moments.

With reference to the methods provided in the third aspect and the fourth aspect, in a possible implementation solution, the priority of the quantization information on the (*g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the (*g* + 1)^{th} fourth basis vector that is associated with the superposition coefficient difference corresponding to the *l*^{th} transport layer or antenna port of the first apparatus among the plurality of superposition coefficient differences. The priority value of the quantization information on the (*g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l*; *Pri*(*l, g) = 2vg + l*; or *Pri*(*l, g) = vg*² *+ l,* where *Pri*(*l, g)* represents the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences. In this way, a priority is calculated for each piece of quantization information, and the quantization information may be reported based on the priority. For example, information that is more important to the channel state information may be preferentially reported, so that accuracy of the reported channel state information can be improved.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis. This can make information in the second indication information more complete, thereby improving accuracy of the reported channel state information.

In a possible implementation solution, the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis. In this way, information that is more important to the channel state information may be preferentially reported, thereby improving accuracy of the reported channel state information.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f}^{th}* frequency-domain basis vector and a *kₛ*^{th} spatial-domain basis vector on the *l*^{th} transport layer or antenna port of the first apparatus in the second spatial-frequency basis satisfies the following relationship: *Pri*(*l, kₛ, k_{f}*) = *vKₛk_{f} + vkₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a total quantity of spatial-domain basis vectors, and *kₛ, k_{f}* and *Kₛ* all are integers. In this way, a priority is calculated for each second superposition coefficient, and the second superposition coefficient may be reported based on the priority. For example, information that is more important to the channel state information may be preferentially reported, so that accuracy of the reported channel state information can be improved.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a (*q* + 1)^{th} spatial-frequency basis vector satisfies the following relationship: *Pri*(*l, q) = qv + l,* where *l* represents the index of the transport layer or the antenna port of the first apparatus, *Pri*(*l, q)* represents the priority value of the superposition coefficient corresponding to the (*q* + 1)^{th} spatial-frequency basis vector on the *l*^{th} transport layer or antenna port of the first apparatus in the second spatial-frequency basis, and *q* is an integer. In this way, a priority is calculated for each second superposition coefficient, and the second superposition coefficient may be reported based on the priority. For example, information that is more important to the channel state information may be preferentially reported, so that accuracy of the reported channel state information can be improved.

According to a fifth aspect, a channel state information reporting method is provided. The channel state information reporting method includes: A first apparatus receives a reference signal from a second apparatus. The first apparatus sends first indication information to the second apparatus at a fifth moment. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the first apparatus at a second moment, and the second moment is earlier than the first moment. Each of the at least part of first weighting coefficients corresponds to one priority, and a priority of a first weighting coefficient on a (*j* + 1)^{th} second basis vector in the second basis that is associated with an (*i* + 1)^{th} first basis vector in the first basis is determined based on one or more of the following: a total quantity *M* of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, where 0 ≤ *i < M,* 0 ≤ *j < M̃*, *M̃* ≤ *M,* and *M, M̃, i* and *j* all are integers.

In a possible implementation solution, the priority of the first weighting coefficient on the (*j* + 1)^{th} second basis vector in the second basis that is associated with the (*i* + 1)^{th} first basis vector in the first basis is negatively correlated with a priority value of the first weighting coefficient on the (*j* + 1)^{th} second basis vector in the second basis that is associated with the (*i* + 1)^{th} first basis vector in the first basis. The priority value of the first weighting coefficient on the (*j* + 1)^{th} second basis vector in the second basis that is associated with the (*i* + 1)^{th} first basis vector in the first basis satisfies one of the following relationships: *Pri*(*i, j*) *= M̃i + f*(*j*); or *Pri*(*i,j*) *= M̃i*² + *f*(*j*)*,* where *Pri*(*i,j*) represents the priority value of the first weighting coefficient on the (*j* + 1)^{th} second basis vector in the second basis that is associated with the (*i +* 1)^{th} first basis vector in the first basis, and *f*(*j*) increases or decreases with *j.*

In a possible implementation solution, the first indication information further indicates at least part of a plurality of second weighting coefficients and a third basis, and the second basis, the first weighting coefficients corresponding to the second basis, the third basis, and the at least part of second weighting coefficients are used to determine the first basis.

In a possible implementation solution, a priority of each of the second weighting coefficients is lower than a priority of any first weighting coefficient.

In a possible implementation solution, a priority of a second weighting coefficient on a *(k* + 1)^{th} third basis vector in the third basis that is associated with a first vector corresponding to the (i + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector includes a difference between the (*i* + 1)^{th} first basis vector and a projection of the (*i* + 1)^{th} first basis vector on the second basis, and k is an integer.

In a possible implementation solution, the priority of the second weighting coefficient on the (*k* + 1)^{th} third basis vector in the third basis that is associated with the first vector corresponding to the (*i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the (*k* + 1)^{th} third basis vector in the third basis that is associated with the first vector corresponding to the (i + 1)^{th} first basis vector in the first basis satisfies the following relationship: *Pri*(*i, k*) = *K*1*ϕ*(*i*) *+ f'*(*k*)*,* where *Pri*(*i, k*) represents the priority value of the second weighting coefficient on the (*k +* 1)^{th} third basis vector in the third basis that is associated with the first vector corresponding to the (*i +* 1)^{th} first basis vector in the first basis, *K*1 is the total quantity of third basis vectors in the third basis, *ϕ*(*i*) increases or decreases with *i, f*'(*k*) increases or decreases with *k,* 0 ≤ *i* < *M*, 0 ≤ *k* < *K*1, and *K*1 is an integer.

In a possible implementation solution, the first basis vector is a spatial-domain basis vector, and the second basis vector is a spatial-domain basis vector; or the first basis vector is a frequency-domain basis vector, and the second basis vector is a frequency-domain basis vector.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient. The first vector corresponding to the (*i* + 1)^{th} first basis vector includes a difference between the (*i* + 1)^{th} first basis vector and a projection of the (*i* + 1)^{th} first basis vector on the second basis, and both s and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (i + 1)^{th} first basis vector in the first basis satisfies the following relationship: *Pri*(*s, f, i*) *= LMπ*(*f*) *+ Lϕ*(*i*) + s, where *Pri*(*s, f, i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f, ϕ*(*i*) increases or decreases with *i*, 0 ≤ *f < F, F* is the total quantity of frequency-domain basis vectors corresponding to the third basis, 0 ≤ *s* < *L*, and both *L* and *F* are integers.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis. The first vector corresponding to the (*i* + 1)^{th} first basis vector includes a difference between the (*i* + 1)^{th} first basis vector and a projection of the (*i* + 1)^{th} first basis vector on the second basis, and both *s and f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri*(*s, f, i*) *= LFϕ*(*i*) *+ Lπ*(*f*) *+* s, where *Pri*(*s, f, i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the quantity of spatial-domain basis vectors corresponding to the third basis, *π*(*f*) is a function of *f, ϕ*(*i*) increases or decreases with i, 0 ≤ *f < F, F* is the total quantity of frequency-domain basis vectors corresponding to the third basis, 0 ≤ s *< L,* and both *L* and *F* are integers.

In a possible implementation solution, the first basis vector is a spatial-frequency basis vector, and the second basis vector is a spatial-frequency basis vector.

In a possible implementation solution, the method provided in the fifth aspect may further include: The first apparatus sends second indication information to the second apparatus at a sixth moment. The second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g, l* and v all are integers. In this way, different coefficients are reported based on correlation between different moments, thereby reducing reporting overheads.

In a possible implementation solution, the priority of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the (*g* + 1 )^{th} fourth basis vector that is associated with the superposition coefficient difference corresponding to the *l*^{th} transport layer or antenna port of the first apparatus among the plurality of superposition coefficient differences. The priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l; Pri*(*l, g*) *= 2vg + l;* or *Pri*(*l, g*) *= vg²* + *l,* where *Pri*(*l, g)* represents the priority value of the quantization information on the *(g* + 1)^{th} fourth basis vector that is associated with the superposition coefficient difference corresponding to the *l*^{th} transport layer or antenna port of the first apparatus.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

In a possible implementation solution, the priorities of the quantization information of the plurality of superposition coefficient differences based on the G fourth basis vectors all are higher than a priority of any one of the second superposition coefficients corresponding to the at least part of spatial-frequency basis vectors in the second spatial-frequency basis.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f}*^{th} frequency-domain basis vector and a *kₛ*^{th} spatial-domain basis vector on the *l*^{th} transport layer or antenna port of the first apparatus in the second spatial-frequency basis satisfies the following relationship: *Pri*(*l, kₛ, k_{f}*) *= vKₛk_{f} + ukₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a total quantity of spatial-domain basis vectors, and *kₛ, k_{f}* and *Kₛ* all are integers.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a *(q* + 1)^{th} spatial-frequency basis vector on the *l*^{th} transport layer or antenna port of the first apparatus in the second spatial-frequency basis satisfies the following relationship: *Pri*(*l, q*) *= qv + l,* where *l* represents the index of the transport layer or the antenna port of the first apparatus, *Pri*(*l, q*) represents the priority value of the superposition coefficient corresponding to the (*q* + 1)^{th} spatial-frequency basis vector on the *l*^{th} transport layer or antenna port of the first apparatus in the second spatial-frequency basis, and *q* is an integer.

In a possible implementation solution, the method provided in the fifth aspect may further include: The first apparatus sends third indication information to the second apparatus at a sixth moment. The third indication information indicates a first superposition coefficient corresponding to each spatial-frequency basis vector in a third spatial-frequency basis at the third moment.

For technical effects of the fifth aspect, refer to the technical effects related to the first aspect or the second aspect. Details are not described herein again.

According to a sixth aspect, a channel state information reporting method is provided. The channel state information reporting method includes: A second apparatus sends a reference signal. The second apparatus receives first indication information from a first apparatus. The first indication information is sent by the first apparatus at a fifth moment. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the first apparatus at a second moment, and the second moment is earlier than the first moment. Each of the at least part of first weighting coefficients corresponds to one priority, and a priority of a first weighting coefficient on a (*j* + 1)^{th} second basis vector in the second basis that is associated with an (*i* + 1)^{th} first basis vector in the first basis is determined based on one or more of the following: a total quantity M of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, where 0 ≤ *i < M, 0* ≤ *j < M̃, M̃* ≤ M, and *M, M̃, i* and *j* all are integers. The second apparatus determines the first basis based on the first indication information.

In a possible implementation solution, the priority of the first weighting coefficient on the (*j* + 1)^{th} second basis vector in the second basis that is associated with the (*i* + 1)^{th} first basis vector in the first basis is negatively correlated with a priority value of the first weighting coefficient on the (*j* + 1)^{th} second basis vector in the second basis that is associated with the (*i* + 1)^{th} first basis vector in the first basis. The priority value of the first weighting coefficient on the (*j* + 1)^{th} second basis vector in the second basis that is associated with the (*i* + 1)^{th} first basis vector in the first basis satisfies one of the following relationships: *Pri*(*i,j*) *= M̃i + f*(*j*); or *Pri*(*i, j*) *= M̃i*² + *f*(*j*)*,* where *Pri*(*i,j*) represents the priority value of the first weighting coefficient on the (*j* + 1)^{th} second basis vector in the second basis that is associated with the (*i +* 1)^{th} first basis vector in the first basis, and *f*(*j*) increases or decreases with *j.*

In a possible implementation solution, the first indication information further indicates at least part of a plurality of second weighting coefficients and a third basis, and the second basis, the first weighting coefficients corresponding to the second basis, the third basis, and the at least part of second weighting coefficients are used to determine the first basis.

In a possible implementation solution, a priority of each of the second weighting coefficients is lower than a priority of any first weighting coefficient.

In a possible implementation solution, a priority of a second weighting coefficient on a (*k* + 1)^{th} third basis vector in the third basis that is associated with a first vector corresponding to the (*i* + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector includes a difference between the (*i* + 1)^{th} first basis vector and a projection of the (*i* + 1)^{th} first basis vector on the second basis, and *k* is an integer.

In a possible implementation solution, the priority of the second weighting coefficient on the (*k* + 1)^{th} third basis vector in the third basis that is associated with the first vector corresponding to the (*i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the (*k* + 1)^{th} third basis vector in the third basis that is associated with the first vector corresponding to the (*i* + 1)^{th} first basis vector in the first basis satisfies the following relationship: *Pri*(*i, k*) *= K*1*ϕ*(*i*) *+ f'*(*k*)*,* where *Pri*(*i, k*) represents the priority value of the second weighting coefficient on the (*k +* 1)^{th} third basis vector in the third basis that is associated with the first vector corresponding to the (*i +* 1)^{th} first basis vector in the first basis, *K*1 is the total quantity of third basis vectors in the third basis, *ϕ*(*i*) increases or decreases with *i, f'*(*k*) increases or decreases with *k,* 0 ≤ *i* < *M*, 0 ≤ *k* < *K*1, and *K*1 is an integer.

In a possible implementation solution, the first basis vector is a spatial-domain basis vector, and the second basis vector is a spatial-domain basis vector; or the first basis vector is a frequency-domain basis vector, and the second basis vector is a frequency-domain basis vector.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient. The first vector corresponding to the (*i* + 1)^{th} first basis vector includes a difference between the (*i* + 1)^{th} first basis vector and a projection of the (*i +* 1)^{th} first basis vector on the second basis, and both *s* and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri*(*s, f, i*) *= LMπ*(*f*) *+ Lϕ*(*i*) + s, where *Pri*(*s, f, i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f, ϕ*(*i*) increases or decreases with i, 0 ≤ *f < F, F* is the total quantity of frequency-domain basis vectors corresponding to the third basis, 0 ≤ *s* < *L*, and both *L* and *F* are integers.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis. The first vector corresponding to the (*i* + 1)^{th} first basis vector includes a difference between the (i + 1)^{th} first basis vector and a projection of the (i + 1)^{th} first basis vector on the second basis, and both s and f are integers.

In a possible implementation solution, the priority value of the second weighting coefficient on the third basis vector that corresponds to the (s + 1)^{th} spatial-domain basis vector and the (f + 1)^{th} frequency-domain basis vector in the third basis and that is associated with the first vector corresponding to the (i + 1)^{th} first basis vector in the first basis satisfies the following relationship: *Pri(s, f, i*) *= LFϕ*(*i*) *+ Lπ*(*f*) *+* s, where *Pri(s, f, i)* represents the priority value of the second weighting coefficient on the third basis vector that corresponds to the (s + 1)^{th} spatial-domain basis vector and the (f + 1)^{th} frequency-domain basis vector in the third basis and that is associated with the first vector corresponding to the (i + 1)^{th} first basis vector in the first basis, *L* is the quantity of spatial-domain basis vectors corresponding to the third basis, *π*(*f*) is a function of *f, ϕ*(*i*) increases or decreases with *i,* 0 ≤ *f < F, F* is the total quantity of frequency-domain basis vectors corresponding to the third basis, 0 ≤ *s < L,* and both *L* and *F* are integers.

In a possible implementation solution, the first basis vector is a spatial-frequency basis vector, and the second basis vector is a spatial-frequency basis vector.

In a possible implementation solution, the method provided in the sixth aspect may further include: The second apparatus receives second indication information. The second indication information is sent by the first apparatus at a sixth moment. The second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a *(g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g, l* and *v* all are integers.

In a possible implementation solution, the priority of the quantization information on the (*g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the (*g* + 1 )^{th} fourth basis vector that is associated with the superposition coefficient difference corresponding to the *l*^{th} transport layer or antenna port of the first apparatus among the plurality of superposition coefficient differences. The priority value of the quantization information on the (*g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l; Pri*(*l, g*) *= 2vg + l;* or *Pri*(*l, g*) *= vg*² + *l,* where *Pri*(*l, g*) represents the priority value of the quantization information on the (*g* + 1)^{th} fourth basis vector that is associated with the superposition coefficient difference corresponding to the *l*^{th} transport layer or antenna port of the first apparatus among the plurality of superposition coefficient differences.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

In a possible implementation solution, the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f} ^{th}* frequency-domain basis vector and a *kₛ*^{th} spatial-domain basis vector on the *l*^{th} transport layer or antenna port of the first apparatus in the second spatial-frequency basis satisfies the following relationship: *Pri*(*l, kₛ, k_{f}*) *= vKₛk_{f} + vkₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a total quantity of spatial-domain basis vectors, and *kₛ, k_{f}* and *Kₛ* all are integers.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis. A priority value of a superposition coefficient corresponding to a (*q* + 1)^{th} spatial-frequency basis vector satisfies the following relationship: *Pri*(*l, q*) *= qv + l,* where *l* represents the index of the transport layer or the antenna port of the first apparatus, and *Pri*(*l, q*) represents the priority value of the superposition coefficient corresponding to the (*q* + 1)^{th} spatial-frequency basis vector on the *l*^{th} transport layer or antenna port of the first apparatus in the second spatial-frequency basis.

In a possible implementation solution, the method provided in the sixth aspect may further include: The second apparatus receives third indication information from the first apparatus. The third indication information indicates a first superposition coefficient corresponding to each spatial-frequency basis vector in a third spatial-frequency basis at the third moment.

For technical effects of the method according to the sixth aspect, refer to the technical effects of the method according to the fifth aspect. Details are not described herein again.

According to a seventh aspect, a channel state information reporting method is provided. The channel state information reporting method includes: A first apparatus receives a reference signal from a second apparatus. The first apparatus sends second indication information to the second apparatus at a sixth moment. The second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1 )^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g, l* and *v* all are integers.

In a possible implementation solution, the method provided in the seventh aspect may further include: The first apparatus sends fourth indication information to the second apparatus at a fifth moment. The fourth indication information indicates a third superposition coefficient corresponding to each spatial-frequency basis vector in the spatial-frequency basis determined based on the reference signal.

According to an eighth aspect, a channel state information reporting method is provided. The channel state information reporting method includes: A second apparatus sends a reference signal to a first apparatus. The second apparatus receives second indication information from the first apparatus. The second indication information is sent by the second apparatus at a sixth moment. The second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g, l,* and *v* all are integers. The second apparatus determines a second vector based on the second indication information.

In a possible implementation solution, the method provided in the eighth aspect may further include: The second apparatus receives fourth indication information from the first apparatus. The fourth indication information indicates a third superposition coefficient corresponding to each spatial-frequency basis vector in the spatial-frequency basis determined based on the reference signal. The fourth indication information is sent by the first apparatus at a fifth moment.

Based on the method according to the seventh aspect or the eighth aspect, in a possible implementation solution, the priority of the quantization information on the (*g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the (*g* + 1)^{th} fourth basis vector that is associated with the superposition coefficient difference corresponding to the *l*^{th} transport layer or antenna port of the first apparatus among the plurality of superposition coefficient differences. The priority value of the quantization information on the (*g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l*; *Pri*(*l, g*) *= 2vg + l*; or *Pri*(*l, g*) *= vg*² *+ l,* where *Pri*(*l, g*) represents the priority value of the quantization information on the (*g* + 1)^{th} fourth basis vector that is associated with the superposition coefficient difference corresponding to the *l*^{th} transport layer or antenna port of the first apparatus among the plurality of superposition coefficient differences.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

In a possible implementation solution, the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f}*^{th} frequency-domain basis vector and a *kₛ*^{th} spatial-domain basis vector on the *l*^{th} transport layer or antenna port of the first apparatus in the second spatial-frequency basis satisfies the following relationship: *Pri*(*l, kₛ, k_{f}*) *= vKₛk_{f} + vkₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a total quantity of spatial-domain basis vectors, and *kₛ, k_{f}* and *Kₛ* all are integers.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a (*q* + 1)^{th} spatial-frequency basis vector satisfies the following relationship: *Pri*(*l, q*) *= qv + l,* where *l* represents the index of the transport layer or the antenna port of the first apparatus, *Pri*(*l, q*) represents the priority value of the superposition coefficient corresponding to the (*q* + 1)^{th} spatial-frequency basis vector on the *l*^{th} transport layer or antenna port of the first apparatus in the second spatial-frequency basis, and q is an integer.

For technical effects of the method according to the seventh aspect or the eighth aspect, refer to the technical effects of the method according to the third aspect. Details are not described herein again.

According to a ninth aspect, a communication apparatus is provided. The communication apparatus is configured to perform the method according to any one of the implementations of the first aspect to the eighth aspect.

In this application, the communication apparatus according to the ninth aspect may be a terminal or a network device, or may be a chip (system) or another part or component that may be disposed in the terminal or the network device, or may be an apparatus including the terminal or the network device.

It should be understood that the communication apparatus according to the ninth aspect includes a corresponding module, unit, or means (means) for implementing the method according to any one of the first aspect to the eighth aspect. The module, unit, or means may be implemented by using hardware, software, or hardware executing corresponding software. The hardware or the software includes one or more modules or units configured to perform functions in the foregoing methods.

According to a tenth aspect, a communication apparatus is provided. The communication apparatus includes a processor. The processor is configured to perform the method according to any one of the possible implementations of the first aspect to the eighth aspect.

In a possible implementation solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible implementation solution, the communication apparatus according to the tenth aspect may further include a memory. The memory may be integrated with the processor, or may be disposed separately from the processor. The memory may be configured to store a computer program and/or data in the method according to any one of the first aspect to the eighth aspect.

In this application, the communication apparatus according to the tenth aspect may be a terminal or a network device, or may be a chip (system) or another part or component that may be disposed in the terminal or the network device, or may be an apparatus including the terminal or the network device.

According to an eleventh aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect to the eighth aspect.

In a possible implementation solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be a terminal or a network device, or may be a chip (system) or another part or component that may be disposed in the terminal or the network device, or may be an apparatus including the terminal or the network device.

According to a twelfth aspect, a communication apparatus is provided, including a processor and a memory. The memory is configured to store a computer program, and when the processor executes the computer program, the communication apparatus is caused to perform the method according to any one of the implementations of the first aspect to the eighth aspect.

In a possible implementation solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this application, the communication apparatus according to the twelfth aspect may be a terminal or a network device, or may be a chip (system) or another part or component that may be disposed in the terminal or the network device, or may be an apparatus including the terminal or the network device.

According to a thirteenth aspect, a communication apparatus is provided, including a processor. The processor is configured to: be coupled to a memory, and after reading a computer program in the memory, perform the method according to any one of the implementations of the first aspect to the eighth aspect based on the computer program.

In a possible implementation solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this application, the communication apparatus according to the thirteenth aspect may be a terminal or a network device, or may be a chip (system) or another part or component that may be disposed in the terminal or the network device, or may be an apparatus including the terminal or the network device.

According to a fourteenth aspect, a processor is provided. The processor is configured to perform the method according to any one of the possible implementations of the first aspect to the eighth aspect.

According to a fifteenth aspect, a communication system is provided. The communication system includes one or more terminals and one or more network devices.

According to a sixteenth aspect, a computer-readable storage medium is provided, including a computer program or instructions. When the computer program or the instructions are run on a computer, the computer is caused to perform the method according to any one of the possible implementations of the first aspect to the eighth aspect.

According to a seventeenth aspect, a computer program product is provided, including a computer program or instructions. When the computer program or the instructions are run on a computer, the computer is caused to perform the method according to any one of the possible implementations of the first aspect to the eighth aspect.

In addition, for technical effects of the communication apparatuses according to the ninth aspect to the seventeenth aspect, refer to the technical effects of the methods according to the first aspect to the eighth aspect. Details are not described herein again.

### BRIEF DESCRIPTION OF DRAWINGS

FIG. 1 is a schematic flowchart of CSI reporting according to an embodiment of this application;
FIG. 2 is a diagram of an architecture of a communication system according to an embodiment of this application;
FIG. 3 is a diagram of a protocol architecture between a network device and a terminal according to an embodiment of this application;
FIG. 4 is a schematic flowchart 1 of a channel state information reporting method according to an embodiment of this application;
FIG. 5 is a diagram 1 of an information priority according to an embodiment of this application;
FIG. 6 is a diagram 2 of an information priority according to an embodiment of this application;
FIG. 7 is a schematic flowchart 2 of a channel state information reporting method according to an embodiment of this application;
FIG. 8 is a diagram of superposition coefficients reported at different moments according to an embodiment of this application;
FIG. 9 is a diagram 3 of an information priority according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

The following describes technical terms and related technical solutions in this application with reference to the accompanying drawings.

In a communication system that uses a MIMO technology for communication, data received by a data receiving end (that is, a first apparatus) may be data obtained after a transmitting end (that is, a second apparatus) performs data precoding. The second apparatus may perform data precoding based on channel state information (channel state information, CSI) reported by the data receiving end. For ease of understanding, in embodiments of this application, an example in which the second apparatus is a network device such as a radio access network device and the first apparatus is a terminal is used for description. Details are not described subsequently. It should be understood that, in some possible implementation solutions, the second apparatus may be a terminal, and the first apparatus may be a network device.

The following first describes a CSI reporting procedure provided in embodiments of this application.

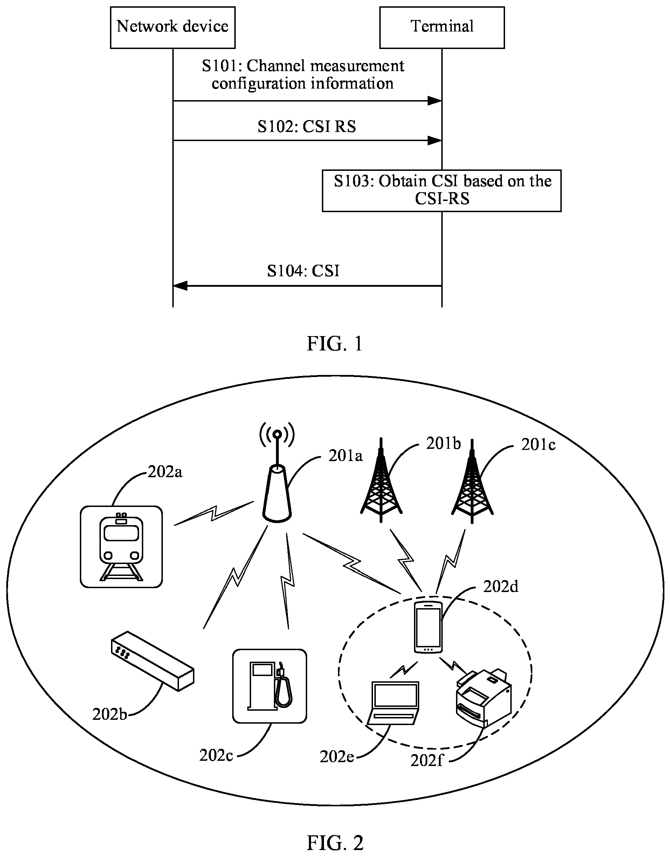

FIG. 1 is a flowchart of CSI reporting according to an embodiment of this application. As shown in FIG. 1, the CSI reporting procedure includes the following steps S101 to S104.

S101: A network device sends channel measurement configuration information to a terminal.

The channel measurement configuration information indicates to perform channel measurement and indicates a configuration parameter for performing channel measurement, for example, a parameter for configuring a time-domain resource and a frequency-domain resource. For example, the channel measurement configuration information may indicate a resource for carrying a channel state information reference signal (channel state information reference signal, CSI-RS), that is, a CSI-RS resource.

S102: The network device sends the CSI-RS to the terminal on the CSI-RS resource. Correspondingly, the terminal receives the CSI-RS from the network device on the CSI-RS resource.

In a communication system, for example, a new radio (new radio, NR) system, a network device sends a CSI-RS on a CSI-RS resource for a terminal to detect a downlink channel, and the terminal receives the CSI-RS on the preconfigured CSI-RS resource to perform channel estimation.

S103: The terminal obtains CSI based on the CSI-RS.

For an implementation principle of S103, refer to a related CSI obtaining method in the conventional technology. Details are not described herein again.

S104: The terminal reports the CSI to the network device.

For different types of codebooks, information in the CSI reported by the terminal to the network device is different. The following provides descriptions with reference to specific codebook solutions.
1. Codebook based on a statistical feature subspace.

In the codebook based on a statistical feature subspace, a channel may be represented by a linear combination of channel eigenvectors. Therefore, a channel eigenvector and a superposition coefficient of the eigenvector may be reported. In the following, all eigenvectors are referred to as basis vectors.

It is assumed that a quantity of antennas of the network device is *Nₜₓ,* and a quantity of frequency domain units is *N_{f}.*

1.1. A space domain and a frequency domain in the codebook are represented by vectors in respective feature subspace bases. The spatial-domain feature subspace basis may be obtained by extracting an eigenvector of a spatial-domain covariance matrix, and the frequency-domain feature subspace basis may be obtained by using an eigenvector of a frequency-domain covariance matrix. A dimension of the spatial-domain covariance matrix is *Nₜₓ* × *Nₜₓ,* that is, the spatial-domain covariance matrix is a matrix of *Nₜₓ* rows and *Nₜₓ* columns. A dimension of the frequency-domain covariance matrix is *N_{f}* × *N_{f},* that is, the frequency-domain covariance matrix is a matrix of *N_{f}* rows and *N_{f}* columns.

In this case, in a possible implementation solution, a channel matrix ***H*** corresponding to each antenna (which may also be referred to as each antenna port) of the terminal (which may also be a precoding matrix of each transport layer of the terminal) satisfies a relationship shown in Formula (1): $H \approx S ′ {C}_{1} {C}_{2} {C}_{3} F {′}^{H} ;$ (1)

***S*'** represents a spatial-domain basis (which may also be referred to as a spatial-domain basis matrix), a dimension of ***S'*** is *Nₜₓ* × *M*0, and *M*0 represents a quantity of spatial-domain basis vectors in ***S'. C*₁** represents a superposition coefficient matrix of spatial-domain basis vectors in the spatial-domain basis, and a dimension of ***C*₁** is *M*0 × *D*0. ***S**' **C***₁ represents a spatial-domain basis reconstructed by a group of *D0* spatial-domain basis vectors obtained through a linear combination of spatial-domain basis vectors in ***S',*** and the reconstructed spatial-domain basis is a quantized approximation of a spatial-domain feature subspace basis (eigenvectors or basis vectors corresponding to a plurality of largest eigenvalues of a spatial-domain statistical covariance matrix). ***F'*** represents a frequency-domain basis (which may also be referred to as a frequency-domain basis matrix), a dimension of ***F'** is N_{f}* × *N*0, and *N*0 represents a quantity of frequency-domain basis vectors in *F'. **C***₃ represents a superposition coefficient matrix of frequency-domain basis vectors in the frequency-domain basis, a dimension of ***C***₃ is *N*0 × *K*0, a conjugate transpose of ***C***₃ is ${C}_{3}^{H}$*, **F**'^{H}* represents a conjugate transpose of ***F'* ,** $F ′ {C}_{3}^{H}$ represents a group of *K*0 reconstructed frequency-domain bases obtained through a linear combination of frequency-domain basis vectors in ***F**',* and the reconstructed frequency-domain basis is a quantized approximation of a frequency-domain feature subspace basis. ***C***₂ represents a superposition coefficient matrix corresponding to a combination of the reconstructed spatial-domain basis and the reconstructed frequency-domain basis, and a dimension is *D*0 × *K*0*.*

The terminal reports ***S', C***₁, ***F', C***₃ in a first period and reports ***C***₂ in a second period. In other words, the CSI reported by the terminal may include ***S', C***₁, ***F', C***₃ and/or ***C***₂. A time length of the first period is greater than or equal to a time length of the second period. In other words, the terminal may report ***S', C***₁, ***F', C***₃ in a long period and report ***C***₂ in a short period. For example, the time length of the first period may be 300 milliseconds (millisecond, ms), and the time length of the second period may be 5 ms. It should be understood that the first period and the second period herein are merely used as an example. During actual implementation, the first period and the second period may alternatively have other time lengths.

The spatial-domain basis may be a discrete Fourier transform (discrete Fourier transform, DFT) basis. For example, when a transmit antenna of the network device includes two antennas distributed in mutually perpendicular directions (for example, a vertical direction and a horizontal direction), a spatial-domain basis vector in the spatial-domain basis may be a twodimensional DFT (2-dimensional DFT, 2D-DFT) vector.

In another possible implementation solution, if a transmit antenna of the network device is a dual-polarized antenna, spatial-domain covariances corresponding to two antenna polarization directions may be averaged. In this case, one covariance matrix may be calculated for each polarization direction, and then the spatial-domain covariances corresponding to the two polarization directions are averaged. In this case, a dimension of the spatial-domain covariance matrix is $\frac{{N}_{tx}}{2} \times \frac{{N}_{tx}}{2}$, and the two polarization directions use a same spatial-domain basis. In this way, a channel matrix ***H*** corresponding to each antenna (which may also be referred to as each antenna port) of the terminal (which may also be a precoding matrix of each transport layer of the terminal) may satisfy a relationship shown in Formula (2), that is, Formula (1) is changed to Formula (2): $H \approx \left[\begin{matrix}S " {C}_{1}^{′} & 0 \\ 0 & S " {C}_{1}^{′}\end{matrix}\right] {C}_{2} {C}_{3} F {′}^{H} ;$ (2)

***S**"* represents a spatial-domain basis in one polarization direction, and a dimension of ***S**"* is $\frac{{N}_{tx}}{2} \times M 0$. ${C}_{1}^{′}$ represents a superposition coefficient matrix of spatial-domain basis vectors in a spatial-domain basis in one polarization direction, and a dimension of ${C}_{1}^{′}$ becomes $M \times \frac{D 0}{2}$. There are still *D*0 reconstructed spatial-domain bases in total.

In this case, the terminal reports ***S"**,* ${C}_{1}^{′}$, ***F'*** and ***C***₃ (or $S " {C}_{1}^{′}$ and ***C***₃***F**'^{H}*) in a first period and reports ***C***₂ in a second period. In other words, the CSI reported by the terminal may include ***S",*** ${C}_{1}^{′}$***, F'**, **C***₃ (or $S " {C}_{1}^{′}$***, C***₃***F**'^{H}*) and/or ***C***₂.

1.2. The codebook is represented by a basis vector in a feature subspace basis in joint spatial-frequency domain.

The feature subspace basis in joint spatial-frequency domain may be obtained by extracting an eigenvector of a spatial-frequency-domain covariance matrix. Spatial-frequency domain means that space domain and frequency domain correspond to one dimension. A single antenna of the terminal is used as an example. A spatial-frequency-domain channel may be represented as a vector of (*NₜₓN_{f}*) × 1. Therefore, a dimension of a spatial-frequency-domain covariance matrix corresponding to the terminal is (*NₜₓN_{f}*) × (*NₜₓN_{f}*). In this case, a channel matrix ***H*** corresponding to each antenna (an antenna between the terminal and the network device) of the terminal (which may also be a precoding matrix of each transport layer of the terminal) may satisfy a relationship shown in Formula (3): $H \approx B {C}_{11} {C}_{21} ;$ (3)

***B*** is a spatial-frequency-domain basis (which may also be referred to as a spatial-frequency-domain basis matrix or a spatial-frequency basis, and is referred to as a spatial-frequency basis below), a dimension of ***B*** is (*NₜₓN_{f}*) × *M*0, and *M*0 represents a quantity of spatial-frequency-domain basis vectors (referred to as spatial-frequency basis vectors below) in ***B**. **C***₁₁ is a superposition coefficient matrix corresponding to spatial-frequency basis vectors in the spatial-frequency basis, a dimension is *M*0 × *K*0*, **BC***₁₁ represents a group of *K*0 reconstructed spatial-frequency basis vectors corresponding to a linear combination of spatial-frequency basis vectors in ***B***, and the reconstructed spatial-frequency basis is a quantized approximation of a spatial-frequency-domain feature subspace basis. A dimension of ***C***₂₁ is *K*0 × 1, representing a superposition coefficient matrix corresponding to the *K*0 reconstructed spatial-frequency bases.

The terminal reports ***B*** and ***C***₁₁ (or ***BC***₁) in a third period and reports ***C***₂₁ in a fourth period. In other words, the CSI reported by the terminal may include ***B, C***₁₁ (or ***BC***₁) and/or ***C***₂₁. A time length of the third period is greater than or equal to a time length of the fourth period. In other words, the terminal may report ***B*** and ***C***₁₁ (or ***BC***₁) in a long period and report ***C***₂₁ in a short period. For example, the third period may be 300 ms, and the fourth period may be 5 ms. It should be understood that the third period and the fourth period herein are merely used as an example. During actual implementation, the third period and the fourth period may alternatively have other time lengths.

A spatial-frequency basis vector may be obtained by using a Kronecker product of a spatial-domain basis vector and a frequency-domain basis vector. In other words, one spatial-frequency basis vector may include one spatial-domain basis vector and one frequency-domain basis vector. For implementations of the spatial-domain basis vector and the frequency-domain basis vector, refer to the foregoing related descriptions. Details are not described herein again.

In another possible implementation solution, if a transmit antenna of the network device is a dual-polarized antenna, spatial-frequency-domain covariances corresponding to two antenna polarization directions may be averaged. In this case, a dimension of the spatial-frequency-domain covariance matrix is $\frac{{N}_{tx} {N}_{f}}{2} \times \frac{{N}_{tx} {N}_{f}}{2}$, and the two polarization directions use a same spatial-frequency basis. In this case, a channel matrix ***H*** corresponding to each antenna (an antenna between the terminal and the network device) of the terminal (which may also be a precoding matrix of each transport layer of the terminal) may satisfy a relationship shown in Formula (4), that is, Formula (3) may be changed to Formula (4): $H \approx \left[\begin{matrix}B ′ {C}_{11}^{′} & 0 \\ 0 & B ′ {C}_{11}^{′}\end{matrix}\right] {C}_{21} ;$ (4)

***B'*** is a spatial-frequency-domain matrix in one polarization direction, and a dimension of ***B'*** is $\frac{{N}_{tx} {N}_{f}}{2} \times M 0$. ${C}_{11}^{′}$ is a spatial-frequency-domain coefficient matrix in one polarization direction, and a dimension of ${C}_{11}^{′}$ is $M \times \frac{K 0}{2}$. In this case, there are still *K*0 reconstructed spatial-frequency basis vectors in total.

In this case, the terminal reports ***B'*** and ${C}_{11}^{′}$ (or $B ′ {C}_{11}^{′}$) in a third period and reports ***C***₂₁ in a fourth period. In other words, the CSI reported by the terminal may include ***B',*** ${C}_{11}^{′}$ (or $B ′ {C}_{11}^{′}$) and/or ***C***₂₁.

In the following embodiments of this application, a basis (for example, ***S'C*₁, *C*₃*F'^{H},*** and ***BC***₁) reported based on the first period or the third period is referred to as a long-period basis, the basis may be a spatial-domain basis, a frequency-domain basis, or a spatial-frequency basis, and an element in a superposition coefficient matrix ***C***₂ reported based on the second period or the third period is referred to as a short-period coefficient.

2. Spatial-frequency-domain coefficient reporting sequence.

In existing protocols, spatial-frequency-domain coefficients may be reported based on different priorities. For example, different spatial-frequency-domain coefficients may have corresponding priority values, and a spatial-frequency-domain coefficient with a smaller priority value has a higher priority and is reported earlier.

In the 3rd generation partnership project (3rd generation partnership project, 3GPP) release 16 enhanced (release 16 enhanced type II, R16 eTypeII) codebook (codebook), a codebook structure may be represented by using Formula (5): $W = {W}_{11} {W}_{2} {W}_{f}^{H} ;$ (5)

***W***₁₁ represents a spatial-domain basis, each spatial-domain basis vector is in a form of a 2-dimensional DFT vector, a dimension of ***W***₁₁ is *Nₜₓ* × *M*0, *Nₜₓ* is a quantity of transmit antennas of the network device, *M*0 is a quantity of spatial-domain basis vectors in the spatial-domain basis, each spatial-domain basis vector has only one element, and the rest is 0, which is used for port selection. ***W**_{f}* represents a frequency-domain basis, a dimension is *N_{f}* × *N*0*, N_{f}* is a quantity of frequency domain units, *N*0 is a quantity of frequency-domain basis vectors, and each frequency-domain basis vector is in a form of a DFT vector. ***W***₂ is a spatial-frequency superposition coefficient matrix, each element in ***W***₂ is a spatial-frequency superposition coefficient, and a dimension is *M*0 × *N*0.

In the 3GPP R16 eTypeII codebook, a priority value of a spatial-domain superposition coefficient in ***W***₂ satisfies a relationship shown in Formula (6): $Pri \left(l, i, f\right) = {M}_{0} ⋅ υ ⋅ π \left(f\right) + υ ⋅ i + l ;$ (6)

*π*(*f*) satisfies a relationship shown in Formula (7): $π \left(f\right) = min \left(2⋅{n}_{3 , l}^{\left(f\right)},2⋅\left({N}_{f}-{n}_{3 , l}^{\left(f\right)}\right)-1\right) ;$ (7)

*N_{f}* is a total quantity of frequency domain units and is also a total quantity of frequency-domain basis vectors, and ${n}_{3 , l}^{\left(f\right)}$ is a sequence number, in all frequency-domain bases, of an *f*^{th} frequency-domain basis selected from an *l*^{th} layer (for example, if *N_{f}* = 6 and *M*0 = 3, assuming that three frequency-domain bases whose sequence numbers are 0, 1, and 5 are selected from frequency-domain bases whose sequence numbers are 0, 1, 2, 3, 4, and 5 at the *l*^{th} layer, ${n}_{3 , l}^{\left(0\right)} = 0$, ${n}_{3 , l}^{\left(1\right)} = 1$, and $\left.{n}_{3 , l}^{\left(2\right)}=5\right)$.

In a 3GPP release 17 further enhanced (release 17 further enhanced type II port selection, R17 FeTypeII) codebook, a codebook structure may be represented by using Formula (8): $W = {W}_{12} {W}_{2} {W}_{f}^{H} ;$ (8)

***W***₁₂ represents a spatial-domain basis, and is used for antenna port selection.

In the R17 FeTypeII codebook, a priority value of a spatial-domain superposition coefficient in ***W***₂ satisfies a relationship shown in Formula (9): $Pri \left(l, i, f\right) = M 0 ⋅ υ ⋅ f + υ ⋅ i + l ;$ (9)

*M*0 is a quantity of selected spatial-domain bases, *v* is a reported rank, *f* is a sequence number in *N*0 selected frequency-domain bases, *i* is a sequence number of a spatial-domain basis in *M*0 selected spatial-domain bases, and *l* is a sequence number of a layer.

It should be understood that, in the foregoing solutions, information in the CSI may be divided into part1 (part1) and part2 (part2), part1 may be used to determine a data length of part2, and part2 is divided into a plurality of groups (Group), for example, Group0 (Group0), Group1 (Group1), and Group2 (Group2). When resources for carrying the CSI are insufficient, information in a group of a lower priority is discarded, that is, is not reported.

It can be learned that a first apparatus may report channel state information based on correlation between basis vectors at different moments. For example, the first apparatus may report a difference between basis vectors at two moments. In this case, the reported information is related to the basis vectors at the two moments, and the first apparatus does not directly report the basis vectors. Consequently, the foregoing solution of reporting channel state information based on a priority corresponding to a basis vector is not applicable. Therefore, how to report channel state information based on correlation between basis vectors at different moments is an urgent problem to be resolved.

Similarly, the first apparatus may report channel state information based on correlation between superposition coefficients at different moments. For example, the first apparatus may report a difference between superposition coefficients at two moments. In this case, the reported information is related to the superposition coefficients at the two moments, and the first apparatus does not directly report the superposition coefficients. Consequently, the foregoing solution of reporting channel state information based on a priority of a superposition coefficient is not applicable. Therefore, how to report channel state information based on correlation between superposition coefficients at different moments is an urgent problem to be resolved.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may alternatively be used.

In addition, in embodiments of this application, words such as "example" and "for example" are used to indicate an example, an instance, or descriptions. Any embodiment or design scheme described as an "example" in this application should not be explained as being more preferred or having more advantages than another embodiment or design scheme. Exactly, use of the word "example" is intended to present a concept in a specific manner.

First, in this application, "indicate" may include "directly indicate" and "indirectly indicate". When a piece of "information" is described to indicate A, the information may directly indicate A or indirectly indicate A, but it does not indicate that the information definitely carries A.

Information indicated by a piece of information is referred to as to-be-indicated information. In a specific implementation process, there are a plurality of manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement, and the selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, in the following embodiments, "first", "second", and various numbers are merely used for distinguishing for ease of description, and are not intended to limit the scope of embodiments of this application, for example, are used for distinguishing between different indication information.

Third, "preset", "predefinition", or "preconfiguration" may be implemented by prestoring corresponding code, a corresponding table, or another manner that may indicate related information in a device (for example, including a terminal and a network device), or may be prestipulated in a protocol, and a specific implementation is not limited in this application. In addition, "storage" may be storage in one or more memories. The one or more memories may be separately disposed, or may be integrated into an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, "protocol" in embodiments of this application may be a standard protocol in the communication field, for example, may include a 3GPP LTE protocol (for example, technical specification (technical specification, TS) 36, that is, TS 36 series of technical specifications), an NR protocol (for example, TS 38 series of technical specifications), and a related protocol applied to a future communication system. This is not limited in this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the network architecture and the emergence of new service scenarios, the technical solutions provided in embodiments of this application are also applicable to similar technical problems.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the network architecture and the emergence of new service scenarios, the technical solutions provided in embodiments of this application are also applicable to similar technical problems.

For ease of understanding of embodiments of this application, a communication system applicable to embodiments of this application is first described in detail by using a communication system shown in FIG. 2 as an example. For example, FIG. 2 is a diagram of an architecture of a communication system to which a method is applicable according to an embodiment of this application.

As shown in FIG. 2, the communication system includes a network device and a terminal.

For example, the network device may include a network device 201a to a network device 201c, and the terminal may include a terminal 202a to a terminal 202f. The terminal may be connected to the network device in a wireless manner, and a network may be connected to a core network (not shown in FIG. 2) in a wired or wireless manner.

The network device may exchange information with the terminal.

The terminal may be a terminal having a transceiver function, or may be a chip or a chip system disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal device, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in self-driving, a wireless terminal in industrial control (industrial control), a wireless terminal in self-driving (self-driving), a wireless terminal in telemedicine (telemedicine), a wireless terminal in smart grid (smart grid), a wireless terminal in transportation safety (transportation safety), a wireless terminal in smart city (smart city), a wireless terminal in smart home (smart home), a vehicle-mounted terminal, a roadside unit (roadside unit, RSU) or the like having a terminal function, a flight device (for example, a smart robot, a hot air balloon, an uncrewed aerial vehicle, or an airplane), or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more components or units. The terminal may alternatively be another device having a terminal function. For example, the terminal may be a device having a terminal function in D2D communication. A device form of the terminal is not limited in embodiments of this application. An apparatus for implementing functions of a terminal may be a terminal, or may be an apparatus, for example, a chip system, that can enable a terminal to implement the functions. The apparatus may be mounted in the terminal or used in conjunction with the terminal. In embodiments of this application, the chip system may include a chip, or may include a chip and another discrete component.

The network device may be a device having a wireless transceiver function, or may be a chip or a chip system disposed in the device, and is located in an access network (access network, AN) of the communication system, to provide an access service for the terminal. For example, the network device may be referred to as a radio access network (radio access network, RAN) device, and may be specifically an access network device in a next-generation mobile communication system such as 6G, for example, a 6G base station, or the network device may be named in another manner in the next-generation mobile communication system, which falls within the protection scope of embodiments of this application. This is not limited in this application. Alternatively, the network device may include a gNB in 5G such as a new radio (new radio, NR) system, or may include one antenna panel or a group of antenna panels (including a plurality of antenna panels) of a base station in 5G, or may be a network node that constitutes a gNB, a transmission point (transmission and reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein. In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module. A form of the network device is not limited in embodiments of this application. An apparatus for implementing functions of a network device may be a network device, or may be an apparatus, for example, a chip system, that can enable a network device to implement the functions. The apparatus may be mounted in the network device or used in conjunction with the network device.

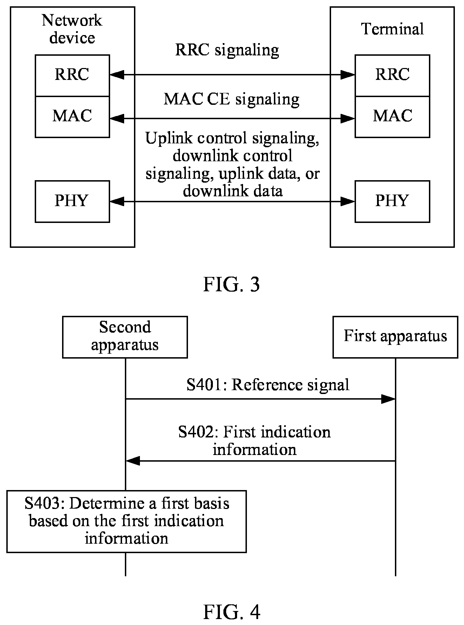

As shown in FIG. 3, a network device includes an RRC signaling exchange module (RRC in FIG. 3), a MAC signaling exchange module (MAC in FIG. 3), and a PHY signaling and data exchange module (PHY in FIG. 3), and a terminal includes an RRC signaling exchange module, a MAC signaling exchange module, and a PHY signaling and data exchange module.

The network device and the terminal may exchange RRC signaling through the RRC signaling exchange modules. The network device and the terminal may exchange medium access control control element (medium access control control element, MAC CE) signaling through the MAC signaling interaction modules. The network device and the terminal may exchange one or more of uplink control signaling, downlink control signaling (such as DCI), uplink data, and downlink data through the PHY exchange modules.

It should be noted that a channel state information reporting method provided in embodiments of this application is applicable to the nodes shown in FIG. 2. For a specific implementation, refer to the following method embodiments. Details are not described herein again.

It should be noted that the solutions in embodiments of this application may also be used in another communication system, and a corresponding name may also be replaced with a name of a corresponding function in the another communication system.

It should be understood that FIG. 2 is merely a simplified diagram of an example for ease of understanding. The communication system may further include another network device and/or another terminal that are/is not shown in FIG. 2.

The following specifically describes the channel state information reporting method provided in embodiments of this application with reference to FIG. 4 to FIG. 9.

For example, FIG. 4 is a schematic flowchart 1 of a channel state information reporting method according to an embodiment of this application. The channel state information reporting method is applicable to communication between any two devices shown in FIG. 4.

In some possible embodiments, channel state information reported by a first apparatus to a second apparatus includes weighting coefficients corresponding to basis vectors at different moments. In this case, a difference between the weighting coefficients corresponding to the basis vectors at the different moments may be reported based on priorities corresponding to the weighting coefficients. The following provides descriptions with reference to FIG. 4. As shown in FIG. 4, the channel state information reporting method includes the following steps.

S401: The second apparatus sends a reference signal. Correspondingly, the first apparatus receives the reference signal from the second apparatus.

The first apparatus is a channel state information reporting apparatus, for example, a terminal. The first apparatus may be the terminal in the communication system provided in FIG. 2. It should be understood that, in some possible scenarios, the first apparatus may alternatively be the network device in the communication system provided in FIG. 2. The second apparatus may be a channel state information receiving device, for example, the network device in the communication system provided in FIG. 2.

For example, the reference signal may be a CSI-RS or a demodulation reference signal (demodulation reference signal, DMRS). The reference signal in this embodiment of this application is merely used as an example. During actual implementation, the reference signal may alternatively be another possible reference signal. Details are not described herein again.

S402: The first apparatus sends first indication information to the second apparatus. Correspondingly, the second apparatus receives the first indication information from the first apparatus.

The first indication information indicates at least part of a plurality of first weighting coefficients associated with each first basis vector in a first basis and each second basis vector in a second basis.

The first basis is determined by the first apparatus at a first moment based on the reference signal, and the first basis may include one or more first basis vectors. The first basis may be a spatial-domain basis, for example, ***S**'**C***₁ or $S " {C}_{1}^{′}$ determined at the first moment based on the reference signal. Correspondingly, the first basis vector is a spatial-domain basis vector. Alternatively, the first basis may be a frequency-domain basis, for example, *F'**C***₃*^{H}* determined at the first moment based on the reference signal. Correspondingly, the first basis vector is a frequency-domain basis vector. Alternatively, the first basis may be a spatial-frequency basis, for example, ***BC***₁ or $B ′ {C}_{11}^{′}$ determined at the first moment based on the reference signal. Correspondingly, the first basis vector is a spatial-frequency basis vector.

The second basis is a basis reported by the first apparatus at a second moment, and the second moment is earlier than the first moment. The second basis may include one or more second basis vectors. The second basis may be a spatial-domain basis, for example, ***S'C***₁ or $S " {C}_{1}^{′}$ reported at the second moment. Correspondingly, the second basis vector is a spatial-domain basis vector. Alternatively, the second basis may be a frequency-domain basis, for example, *F'**C***₃*^{H}* reported at the second moment. Correspondingly, the second basis vector is a frequency-domain basis vector. Alternatively, the second basis may be a spatial-frequency basis, for example, ***BC***₁ or $B ′ {C}_{11}^{′}$ reported at the second moment. Correspondingly, the second basis vector is a spatial-frequency basis vector.

The first basis and the second basis are of a same type. For example, both the first basis and the second basis are spatial-domain bases, or both the first basis and the second basis are frequency-domain bases, or both the first basis and the second basis are spatial-frequency bases. Correspondingly, the first basis vector and the second basis vector are of a same type. For example, both the first basis vector and the second basis vector are spatial-domain basis vectors, or both the first basis vector and the second basis vector are frequency-domain basis vectors, or both the first basis vector and the second basis vector are spatial-frequency basis vectors. When the first basis vector is a spatial-domain basis vector, and the second basis vector is a spatial-domain basis vector, a spatial-domain basis may be indicated. When the first basis vector is a frequency-domain basis vector, and the second basis vector is a frequency-domain basis vector, a frequency-domain basis vector may be indicated. When the first basis vector is a spatial-frequency basis vector, and the second basis vector is a spatial-frequency basis vector, a spatial-frequency basis vector may be indicated.

Each first basis vector in the first basis is associated with each second basis vector in the second basis. In other words, each first basis vector in the first basis is projected to the second basis vector, or each first basis vector in the first basis is mapped to each second basis vector in the second basis, or each first basis vector in the first basis corresponds to each second basis vector in the second basis. It may also be understood that the first basis is associated with the second basis, or the first basis is projected to the second basis, or the first basis is mapped to the second basis, or the first basis corresponds to the second basis.

The first indication information indicates a plurality of first weighting coefficients of each second basis vector in the second basis that is associated with each first basis vector in the first basis, namely, a plurality of projection coefficients on each second basis vector in the second basis to which each first basis vector in the first basis is mapped (projected). One first basis vector associated with one second basis vector corresponds to one first weighting coefficient. A weighting coefficient may also be referred to as a projection coefficient.

For ease of understanding, the following uses an example to describe the first weighting coefficient.

Assuming that the first moment is a moment t, the first basis is ***U**ₜ*, the second moment is a moment *t*-1, and the second basis is ***Ũ***_{*t*-1}*,* a weighting coefficient matrix ***C***_{1,c} including a plurality of first weighting coefficients satisfies a relationship shown in Formula (10): ${C}_{1 , c} = {{U}^{˜}}_{t - 1}^{H} {U}_{t} ;$ (10) ${{U}^{˜}}_{t - 1}^{H}$ is a conjugate transpose of ***Ũ***_{*t-*1}, and each element in the weighting coefficient matrix ***C***_{1,c} including the plurality of first weighting coefficients is a first weighting coefficient. An element in a *j*^{th} row and an *i*^{th} column in the matrix ***C***_{1,c} is a first weighting coefficient on a (*j* + 1)^{th} second basis vector in the second basis that is associated with an (i + 1)^{th} first basis vector in the first basis.

The first basis is ***Ũ***_{*t*-1}***C***_{1,*c*} after being associated with the second basis. In other words, a projection of the first basis on the second basis is ***Ũ***_{*t*-1}***C***_{1,}*_{c}.*

At least part of first weighting coefficients may be part of the elements in the weighting coefficient matrix ***C***_{1,*c*}. It should be understood that the weighting coefficient matrix ***C***_{1,c} may also be referred to as a common space coefficient matrix between the first basis and the second basis. The first weighting coefficient may also be referred to as a common space coefficient between the first basis vector in the first basis and the second basis vector in the second basis.

Each of the at least part of first weighting coefficients corresponds to one priority. A priority of the first weighting coefficient on the (*j* + 1)^{th} second basis vector in the second basis that is associated with the (*i* + 1)^{th} first basis vector in the first basis is determined based on one or more of the following: a total quantity *M* of first basis vectors in the first basis, a quantity *M̃* of second basis vectors in the second basis, an index (index) of the (*i* + 1)^{th} first basis vector in the first basis, or an index of the (*j* + 1)^{th} second basis vector in the second basis, where 0 ≤ *i < M,* 0 ≤ *j < M̃*, *M̃* ≤ *M,* and *i,j, M* and *M̃* all are integers. It should be understood that an index of a basis vector in a basis indicates the basis vector in a plurality of basis vectors included in the basis, for example, a sequence number of the basis vector in the plurality of basis vectors, or a specific basis vector in the plurality of basis vectors.

It may be understood that "index" in embodiments of this application is merely used as an example. During actual implementation, "index" may alternatively use another name, for example, "sequence number" or "identifier". This is not limited in embodiments of this application.

It should be understood that both the first basis and the second basis are bases of a same type, for example, bases constructed by basis vectors selected from spatial-domain bases, frequency-domain bases, or spatial-frequency-domain bases. A quantity of basis vectors in the first basis may be the same as or different from a quantity of basis vectors in the second basis.

A priority corresponding to one first weighting coefficient is used to determine a reporting sequence of the first weighting coefficient. A first weighting coefficient of a higher priority is reported earlier, and a first weighting coefficient of a lower priority is reported later. The index of the (*i* + 1)^{th} first basis vector may be *i* or *i +* 1. For example, an index of a 1^{st} first basis vector may be 0 or 1. Similarly, the index of the (*j* + 1)^{th} second basis vector may be *j* or *j +* 1. For example, an index of a 1^{st} second basis vector may be 0 or 1.

In a possible implementation solution, the priority of the first weighting coefficient on the (*j* + 1)^{th} second basis vector in the second basis that is associated with the (*i* + 1)^{th} first basis vector in the first basis is negatively correlated with a priority value of the first weighting coefficient on the (*j* + 1)^{th} second basis vector in the second basis that is associated with the (*i* + 1)^{th} first basis vector in the first basis.

The priority value of the first weighting coefficient on the (*j* + 1)^{th} second basis vector in the second basis that is associated with the (*i* + 1)^{th} first basis vector in the first basis is determined based on the index of the (i + 1)^{th} first basis vector in the first basis and the index of the (*j* + 1)^{th} second basis vector in the second basis.

In a possible implementation solution, the priority value of the first weighting coefficient on the (*j* + 1)^{th} second basis vector in the second basis that is associated with the (*i* + 1)^{th} first basis vector in the first basis ∝ *Pri*(*i, j*). In other words, the priority value of the first weighting coefficient is positively correlated with a value of *Pri*(*i, j),* or the priority value of the first weighting coefficient is negatively correlated with a value of *Pri*(*i, j*).

For example, assuming that *i* is the index of the (*i* + 1)^{th} first basis vector, and *j* is the index of the (*j* + 1)^{th} second basis vector, the priority value of the first weighting coefficient on the (*j* + 1)^{th} second basis vector in the second basis that is associated with the (*i* + 1)^{th} first basis vector in the first basis satisfies a relationship shown in Formula (11): $Pri \left(i, j\right) = {M}^{˜} i + f \left(j\right) ;$ (11)

*Pri*(*i,j*) represents the priority value of the first weighting coefficient on the (*j* + 1)^{th} second basis vector in the second basis that is associated with the (*i* + 1)^{th} first basis vector in the first basis. *f*(*j*) is determined based on *j.* In other words, *f*(*j*) is a function of *j*. For example, *f*(*j*) increases or decreases with *j*.

In this way, a priority is calculated for each first weighting coefficient, and the first weighting coefficient may be reported based on the priority. For example, if *f*(*j*) increases with *j,* when importance and index values of the second basis vector are negatively correlated, information that is more important to the channel state information may be preferentially reported; or if *f*(*j*) decreases with *j,* when importance and index values of the second basis vector are positively correlated, information that is more important to the channel state information may be preferentially reported. This can improve accuracy of the reported channel state information. In addition, different priority calculation manners may be matched based on a relationship between importance of different basis vectors and indexes of the basis vectors, thereby improving applicability.

That *f*(*j*) increases with *j* may also mean that *f*(*j*) is an increasing function of *j*. For example, *f*(*j*) may satisfy a relationship shown in Formula (12): $f \left(j\right) = j ;$ (12)

That f(*j*) decreases with *j* may also mean that *f*(*j*) is a decreasing function of *j*. For example, *f*(*j*) may satisfy a relationship shown in Formula (13): $f \left(j\right) = {M}^{˜} - 1 - j ;$ (13)

It should be understood that *f*(*j*) in Formula (12) and Formula (13) is merely used as an example. During actual implementation, *f*(*j*) may alternatively have another possible implementation.

For another example, the priority value of the first weighting coefficient on the (*j* + 1)^{th} second basis vector in the second basis that is associated with the (*i* + 1)^{th} first basis vector in the first basis satisfies a relationship shown in Formula (14): $Pri \left(i, j\right) = {M}^{˜} {i}^{2} + f \left(j\right) ;$ (14)

It should be understood that the priority of the first weighting coefficient on the (*j* + 1)^{th} second basis vector in the second basis that is associated with the (*i* + 1)^{th} first basis vector in the first basis may alternatively be positively correlated with the priority value of the first weighting coefficient on the (*j* + 1)^{th} second basis vector in the second basis that is associated with the (*i* + 1)^{th} first basis vector in the first basis. A specific implementation principle is similar to the implementation principle in which the priority of the first weighting coefficient on the (*j* + 1)^{th} second basis vector in the second basis that is associated with the (*i* + 1)^{th} first basis vector in the first basis is negatively correlated with the priority value of the first weighting coefficient on the (*j* + 1)^{th} second basis vector in the second basis that is associated with the (*i* + 1)^{th} first basis vector in the first basis. Details are not described herein again.

After the first basis is projected to the second basis, part of information may be lost, that is, part of information that cannot be represented by the first basis may exist in the first basis. In this case, the channel state information may further indicate the information that cannot be represented by the first basis in the first basis. With reference to an example in which the first basis is ***U**ₜ,* the second basis is *Ũ*_{*t*-1}, and the matrix including the plurality of first weighting coefficients is ***C***_{1,}*_{c},* the information that cannot be represented by the first basis in the first basis satisfies a relationship shown in Formula (15): $Δ {U}_{t} = {U}_{t} - {{U}^{˜}}_{t - 1} {C}_{1 , c} ;$ (15)

Δ*Uₜ* represents the information that cannot be represented by the first basis in the first basis, that is, a difference matrix including a difference between the first basis and the projection of the first basis on the second basis.

Based on this, in a possible implementation solution, the first indication information further indicates a plurality of second weighting coefficients and a third basis, and the second basis, the first weighting coefficients corresponding to the second basis, the third basis, and the plurality of second weighting coefficients corresponding to the third basis are used to determine the first basis.

The first indication information indicates the second weighting coefficients and the third basis, so that accuracy of the channel state information can be improved.

The third basis may be a basis including *K*1 projection basis vectors selected from a first projection basis, and the third basis may be used to quantize an element in the difference coefficient matrix between the first basis and the projection of the first basis on the second basis. A length of a third basis vector in the third basis is consistent with a length of the first basis vector. In other words, a quantity of elements in the third basis vector is equal to a quantity of elements in the first basis.

Values of *M*, *M̃, K*1 are indicated by the network device. For example, the network device may indicate the values of *M, M̃*, *K*1 by using signaling.

The first projection basis may include a plurality of projection basis vectors. The plurality of projection basis vectors in the first projection basis may be orthogonal to each other. For example, if the first basis and the second basis are spatial-domain bases, the projection basis vector in the first projection basis may be a 2D-DFT vector; if the first basis and the second basis are frequency-domain bases, the basis vector in the projection basis may be a 1-dimensional DFT vector; or if the first basis and the second basis are spatial-frequency bases, the projection basis vector in the projection basis may be a Kronecker product of a 2D-DFT vector and a 1-dimensional DFT vector. The basis vector in the third basis may be a basis including *K*1 projection basis vectors that maximize ∥***d**^{H}*Δ***U**ₜ*∥*,* where ***d*** represents one projection basis vector in the first projection basis, ***d**^{H}* represents a conjugate transpose of ***d***, and ∥ ∥ represents taking an F-norm.

It should be understood that the plurality of projection basis vectors in the first projection basis may alternatively be non-orthogonal. For example, if the first basis and the second basis are spatial-domain bases, the plurality of projection basis vectors in the first projection basis may be obtained by oversampling a 2D-DFT basis; if the first basis and the second basis are frequency-domain bases, the plurality of projection basis vectors in the first projection basis may be obtained by oversampling a DFT basis; or if the first basis and the second basis are spatial-frequency bases, the first projection basis may include Kronecker products of oversampled 2D-DFT vectors and oversampled 1-dimensional DFT vectors. In this case, the *K*1 projection basis vectors may be selected by using an algorithm in compressive sensing. Details are not described herein again.

The second weighting coefficient is a projection coefficient of projection from one vector in the difference matrix to one third basis vector in the third basis.

A matrix including a plurality of weighting coefficients is ***C***_{1,*d*}, where each element in ***C***_{1,*d*} corresponds to one second weighting coefficient.

***C***_{1,*d*} satisfies a relationship shown in Formula (16): ${C}_{1 , d} = {D}^{†} Δ {U}_{t} ;$ (16)

***D*** is the third basis, and ***D***^{†} represents a pseudo-inverse of ***D**.*

It can be learned from Formula (16) that Δ***U**ₜ* further satisfies a relationship shown in Formula (17): $Δ {U}_{t} \approx D {C}_{1 , d} ;$ (17)

In a possible implementation solution, a priority of each of the second weighting coefficients is lower than a priority of any first weighting coefficient. In other words, a reporting sequence of any first weighting coefficient is earlier than a reporting sequence of any second weighting coefficient. In other words, the first weighting coefficient may be reported earlier than the second weighting coefficient.

In a possible implementation solution, a priority of a second weighting coefficient on a (k + 1)^{th} third basis vector in the third basis that is associated with a first vector corresponding to the (i + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector in the first basis is a difference between the (*i +* 1)^{th} first basis vector in the first basis and a vector that is the second basis and that is associated with the (*i* + 1)^{th} first basis vector, that is, a priority of an (*i* + 1)^{th} column of the matrix Δ***U**ₜ,* and *k* is an integer.

In this way, a priority is calculated for each second weighting coefficient, and the second weighting coefficient may be reported based on the priority. For example, information that is more important to the channel state information may be preferentially reported, so that accuracy of the reported channel state information can be improved.

In a possible implementation solution, the priority of the second weighting coefficient on the (*k* + 1)^{th} third basis vector in the third basis that is associated with the first vector corresponding to the (*i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis.

The priority value of the second weighting coefficient on the (*k* + 1)^{th} third basis vector in the third basis that is associated with the first vector corresponding to the (*i* + 1)^{th} first basis vector in the first basis is determined based on the index of the (*i* + 1)^{th} first basis vector and an index of the (*k* + 1)^{th} third basis vector.

In a possible design solution, the priority value of the second weighting coefficient on the (*k* + 1 )^{th} third basis vector in the third basis that is associated with the first vector corresponding to the (*i* + 1)^{th} first basis vector in the first basis ∝ *Pri*(*i, k*)*.* In other words, the priority value of the second weighting coefficient is positively correlated with a value of *Pri*(*i, k*), or the priority value of the second weighting coefficient is negatively correlated with a value of *Pri*(*i, k*)*.*

The priority value of the second weighting coefficient on the (*k* + 1)^{th} third basis vector in the third basis that is associated with the first vector corresponding to the (*i* + 1)^{th} first basis vector in the first basis satisfies a relationship shown in Formula (18): $Pri \left(i, k\right) = K 1 ϕ \left(i\right) + f ′ \left(k\right) ;$ (18)

*Pri(i, k)* represents the priority value of the second weighting coefficient on the (*k* + 1)^{th} third basis vector in the third basis that is associated with the first vector corresponding to the (*i* + 1)^{th} first basis vector in the first basis. *K*1 is the total quantity of third basis vectors in the third basis. *ϕ*(*i*) is determined based on *i.* In other words, *ϕ*(*i*) is a function of *i. f'*(*k*) is determined based on *k.* In other words, *f'*(*k*) is a function of *k.* For example, *ϕ*(*i*) increases or decreases with *i,* and *f'*(*k*) increases or decreases with *k.* 0 ≤ *i < M,* 0 ≤ *k* < *K*1*,* and *K*1 is an integer.

In this way, a priority is calculated for each second weighting coefficient, and the second weighting coefficient may be reported based on the priority. For example, if *ϕ*(*i*) increases with *i* and *f'*(*k*) increases with *k,* when importance of the first basis vector is negatively correlated with an index of the first basis vector and importance of the third basis vector is negatively correlated with an index of the third basis vector, information that is more important to the channel state information may be preferentially reported; if *ϕ*(*i*) increases with *i* and *f'*(*k*) decreases with *k*, when importance of the first basis vector is negatively correlated with an index of the first basis vector and importance of the third basis vector is positively correlated with an index of the third basis vector, information that is more important to the channel state information may be preferentially reported; if *ϕ*(*i*) decreases with *i* and *f'(k)* increases with *k,* when importance of the first basis vector is positively correlated with an index of the first basis vector and importance of the third basis vector is negatively correlated with an index of the third basis vector, information that is more important to the channel state information may be preferentially reported; or if *ϕ*(*i*) decreases with *i* and *f'*(*k*) decreases with *k,* when importance of the first basis vector is positively correlated with an index of the first basis vector and importance of the third basis vector is positively correlated with an index of the third basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

That *ϕ*(*i*) increases with *i* may also mean that *ϕ*(*i*) is an increasing function of *i*. A relationship shown in Formula (19) may be satisfied: $ϕ \left(i\right) = i ;$ (19)

That *ϕ*(*i*) decreases with *i* may also mean that *ϕ*(*i*) is a decreasing function of *i.* For example, *ϕ*(*i*) may satisfy a relationship shown in Formula (20): $ϕ \left(i\right) = M - 1 - i ;$ (20)

It should be understood that *ϕ*(*i*) in Formula (19) and Formula (20) is merely used as an example. During actual implementation, *ϕ*(*i*) may alternatively have another possible implementation.

That *f'(k)* increases with *k* may also mean that *f'*(*k*) is an increasing function of *j*. A relationship shown in Formula (21) may be satisfied: $f ′ \left(k\right) = k ;$ (21)

That *f'*(*k*) decreases with *k* may also mean that *f'*(*k*) is a decreasing function of *j.* For example, *f*(*j*) may satisfy a relationship shown in Formula (22): $f ′ \left(k\right) = K 1 - 1 - k ;$ (22)

It should be understood that *f'(k)* in Formula (21) and Formula (22) is merely used as an example. During actual implementation, *f'(k)* may alternatively have another possible implementation.

In this way, a priority is calculated for each second weighting coefficient, and the second weighting coefficient may be reported based on the priority. For example, information that is more important to the channel state information may be preferentially reported, so that accuracy of the reported channel state information can be improved.

It should be understood that the priority of the second weighting coefficient on the (*k +* 1)^{th} third basis vector in the third basis that is associated with the first vector corresponding to the *(i* + 1)^{th} first basis vector in the first basis may be negatively correlated with the priority value of the second weighting coefficient on the (*k* + 1)^{th} third basis vector in the third basis that is associated with the first vector corresponding to the (*i* + 1)^{th} first basis vector in the first basis. In this case, a specific implementation is similar to the implementation in which the priority of the second weighting coefficient on the (*k* + 1)^{th} third basis vector in the third basis that is associated with the first vector corresponding to the (*i* + 1)^{th} first basis vector in the first basis is negatively correlated with the priority value of the second weighting coefficient on the *(k* + 1)^{th} third basis vector in the third basis that is associated with the first vector corresponding to the *(i* + 1)^{th} first basis vector in the first basis. Details are not described herein again.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the *(i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis.

The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis is determined based on an index of the first basis vector, and an index of the spatial-domain basis vector and an index of the frequency-domain basis vector corresponding to the third basis vector in the third basis.

In a possible design solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i +* 1)^{th} first basis vector in the first basis ∝ *Pri*(*s*, *f, i).* In other words, the priority value of the second weighting coefficient is positively correlated with *Pri*(*s, f, i*), or the priority value of the second weighting coefficient is negatively correlated with *Pri*(*s, f , i).*

The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient, where both s and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies a relationship shown in Formula (23): $Pri \left(s, f, i\right) = LMπ \left(f\right) + Lϕ \left(i\right) + s ;$ (23)

*Pri(s, f , i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f,* and *ϕ*(*i*) is determined based on *i*. For a specific implementation, refer to the related descriptions of *ϕ*(*i*). 0 *≤ f < F, F* is a total quantity of frequency-domain basis vectors corresponding to the third basis, and 0 ≤ *s < L.* Both *L* and *F* are integers. In this way, a priority is calculated for each second weighting coefficient, and the second weighting coefficient may be reported based on the priority. For example, if *ϕ*(*i*) increases with *i,* when importance of the first basis vector is negatively correlated with an index of the first basis vector, information that is more important to the channel state information may be preferentially reported; or if *ϕ*(*i*) decreases with *i*, when importance of the first basis vector is positively correlated with an index of the first basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

In a possible implementation solution, *π*(*f*) increases or decreases with *f.* That *π*(*f*) increases with *f* may also mean that *π*(*f*) is an increasing function of *f.* That *π*(*f*) decreases with *f* may also mean that *π*(*f*) is a decreasing function of *f.* For an implementation of *π*(*f*), refer to the related descriptions of *f*(*j*). Details are not described herein again.

In a possible implementation solution, a priority of a second weighting coefficient on a third basis vector that corresponds to an (s + 1)^{th} spatial-domain basis vector and an *(f* + 1)^{th} frequency-domain basis vector in the third basis and that is associated with a first vector corresponding to the (i + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis.

The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies a relationship shown in Formula (24): $Pri \left(s, f, i\right) = LFϕ \left(i\right) + Lπ \left(f\right) + s ;$ (24)

*Pri*(*s, f , i*) represents the priority value of the second weighting coefficient on the third basis vector that corresponds to the (*s* + 1 )^{th} spatial-domain basis vector and the (*f* + 1)^{th} frequency-domain basis vector in the third basis and that is associated with the first vector corresponding to the (*i* + 1)^{th} first basis vector in the first basis, *L* is the quantity of spatial-domain basis vectors corresponding to the third basis, *π*(*f*) is a function of *f,* and *ϕ*(*i*) is determined based on *i*. For a specific implementation, refer to the related descriptions of *ϕ*(*i*). 0 *≤ f < F, F* is the total quantity of frequency-domain basis vectors corresponding to the third basis, and 0 ≤ *s < L.*

In this way, a priority is calculated for each second weighting coefficient, and the second weighting coefficient may be reported based on the priority. For example, if *ϕ*(*i*) increases with *i*, when importance of the first basis vector is negatively correlated with an index of the first basis vector, information that is more important to the channel state information may be preferentially reported; or if *ϕ*(*i*) decreases with *i*, when importance of the first basis vector is positively correlated with an index of the first basis vector, information that is more important to the channel state information may be preferentially reported. This can improve accuracy of the reported channel state information. In addition, different priority calculation manners may be further matched based on a relationship between importance of basis vectors and indexes of the basis vectors, thereby improving applicability.

It should be understood that the priority of the second weighting coefficient on the third basis vector that corresponds to the (*s +* 1)^{th} spatial-domain basis vector and the *(f* + 1)^{th} frequency-domain basis vector in the third basis and that is associated with the first vector corresponding to the (*i* + 1)^{th} first basis vector in the first basis may be positively correlated with the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. In this case, a specific implementation principle is similar to the implementation principle in which the priority of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis is negatively correlated with the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. Details are not described herein again.

In this embodiment of this application, all first weighting coefficients may be grouped into a plurality of groups. For example, the first weighting coefficients are sorted in ascending order of priority values, and then are sequentially grouped into *X*1 groups: a 0^{th} group, a 1^{st} group, ..., and an (*X*1-1)^{th} group.

In a possible implementation, each group includes $\left⌈M/X1\right⌉$ first weighting coefficients. A priority of any first weighting coefficient in the *x*1'^{th} group is higher than a priority of each first weighting coefficient in the (*x*1' + 1)^{th} group. ┌ ┐ represents a rounding up operation.

In addition, in this embodiment of this application, all second weighting coefficients may be grouped into a plurality of groups. For example, the second weighting coefficients are sorted in ascending order of priority values, and then are sequentially grouped into *X*2 groups: a 0^{th} group, a 1^{st} group, ..., and an (*X*2 - 1)^{th} group.

In a possible implementation, each group includes [*M*/*X*2] second weighting coefficients. A priority of any second weighting coefficient in the *x*2'^{th} group is higher than priorities of all second weighting coefficients in the (*x*2' + 1)^{th} group.

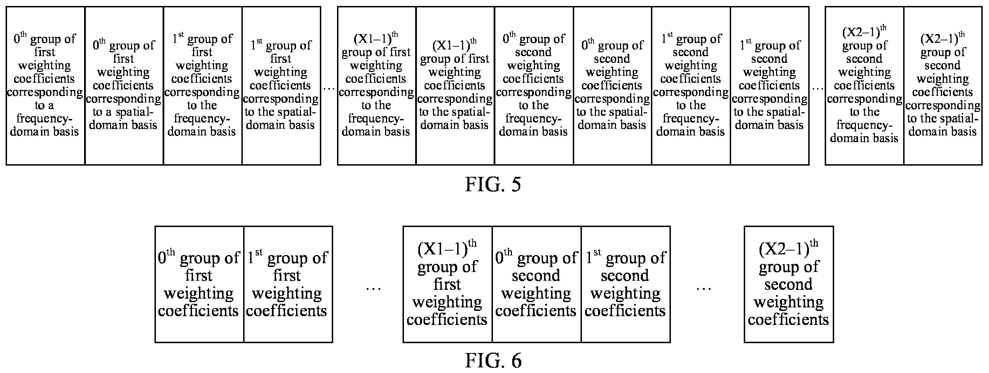

As shown in FIG. 5, in some possible embodiments, both a spatial-domain basis and a frequency-domain basis need to be reported, and first weighting coefficients include first weighting coefficients corresponding to the spatial-domain basis and weighting coefficients corresponding to the frequency-domain basis. In this case, the first weighting coefficients corresponding to the spatial-domain basis may be grouped into *X*2 groups, and the first weighting coefficients corresponding to the frequency-domain basis are grouped into *X*2 groups. In this case, group priorities of the first weighting coefficients in descending order are: the 0^{th} group of first weighting coefficients corresponding to the frequency-domain basis, the 0^{th} group of first weighting coefficients corresponding to the spatial-domain basis, the 1^{st} group of first weighting coefficients corresponding to the frequency-domain basis, the 1^{st} group of first weighting coefficients corresponding to the spatial-domain basis, ..., the *(X2* - 1)^{th} group of first weighting coefficients corresponding to the frequency-domain basis, and the *(X2* - 1)^{th} group of first weighting coefficients corresponding to the spatial-domain basis.

Correspondingly, second weighting coefficients include second weighting coefficients corresponding to the spatial-domain basis and second weighting coefficients corresponding to the frequency-domain basis, the second weighting coefficients corresponding to the spatial-domain basis may be grouped into *X*2 groups, and the first weighting coefficients corresponding to the frequency-domain basis are grouped into *X*2 groups. In this case, group priorities of the second weighting coefficients in descending order are: the 0^{th} group of second weighting coefficients corresponding to the frequency-domain basis, the 0^{th} group of second weighting coefficients corresponding to the spatial-domain basis, the 1^{st} group of second weighting coefficients corresponding to the frequency-domain basis, the 1^{st} group of second weighting coefficients corresponding to the spatial-domain basis, ..., the *(X2* - 1 )^{th} group of second weighting coefficients corresponding to the frequency-domain basis, and the *(X2* - 1)^{th} group of second weighting coefficients corresponding to the spatial-domain basis.

It should be understood that the group priority sequence shown in FIG. 5 is merely used as an example. For example, locations of a group corresponding to the spatial-domain basis and a group corresponding to the frequency-domain basis may be interchanged. The group priorities of the first weighting coefficients in descending order are: the 0^{th} group of first weighting coefficients corresponding to the spatial-domain basis, the 0^{th} group of first weighting coefficients corresponding to the frequency-domain basis, the 1^{st} group of first weighting coefficients corresponding to the spatial-domain basis, the 1^{st} group of first weighting coefficients corresponding to the frequency-domain basis, ..., the (*X*1 - 1)^{th} group of first weighting coefficients corresponding to the spatial-domain basis, and the (*X*1 - 1)^{th} group of first weighting coefficients corresponding to the frequency-domain basis.

The group priorities of the second weighting coefficients in descending order are: the 0^{th} group of second weighting coefficients corresponding to the spatial-domain basis, the 0^{th} group of second weighting coefficients corresponding to the frequency-domain basis, the 1^{st} group of second weighting coefficients corresponding to the spatial-domain basis, the 1^{st} group of second weighting coefficients corresponding to the frequency-domain basis, ..., the *(X2* - 1)^{th} group of second weighting coefficients corresponding to the spatial-domain basis, and the *(X2* - 1)^{th} group of second weighting coefficients corresponding to the frequency-domain basis.

As shown in FIG. 6, in some possible embodiments, a spatial-frequency basis is reported, and first weighting coefficients include first weighting coefficients corresponding to the spatial-frequency basis. In this case, the first weighting coefficients corresponding to the spatial-frequency basis may be grouped into *X*1 groups. In this case, group priorities of the first weighting coefficients in descending order are: the 0^{th} group of first weighting coefficients corresponding to the spatial-frequency basis, the 1^{st} group of first weighting coefficients corresponding to the spatial-frequency basis, ..., and the (*X*1 - 1)^{th} group of first weighting coefficients corresponding to the spatial-frequency basis.

Correspondingly, second weighting coefficients include second weighting coefficients corresponding to the spatial-frequency-domain basis, and the second weighting coefficients corresponding to the spatial-frequency basis may be grouped into X2 groups. In this case, group priorities of the second weighting coefficients in descending order are: the 0^{th} group of second weighting coefficients corresponding to the spatial-frequency basis, the 1^{st} group of second weighting coefficients corresponding to the spatial-frequency basis, ..., and the *(X2* - 1)^{th} group of second weighting coefficients corresponding to the spatial-frequency basis.

It should be understood that, in this embodiment of this application, a weighting coefficient of a higher priority is preferentially reported because priorities of different first weighting coefficients and second weighting coefficients are different. If a transmission resource cannot transmit all remaining weighting coefficients, a weighting coefficient of a higher priority is preferentially uploaded, and a weighting coefficient of a lower priority is discarded, or a weighting coefficient of a lower priority is transmitted in a next transmission process.

S403: The second apparatus determines the first basis based on the first indication information.

In a possible implementation solution, the second apparatus may restore the first basis based on the first weighting coefficients and the second basis. For example, the first basis determined by the second apparatus may satisfy a relationship shown in Formula (25): ${U}_{t} = {{U}^{˜}}_{t - 1} {C}_{1 , c}$ (25).

In a possible implementation solution, when the first indication information further includes a plurality of second weighting coefficients, the first apparatus may determine the first basis based on the first weighting coefficients, the second weighting coefficients, the second basis, and the third basis. For example, the first basis determined by the second apparatus may satisfy a relationship shown in Formula (26): ${U}_{t} = {{U}^{˜}}_{t - 1} {C}_{1 , c} + Δ {U}_{t} \approx {{U}^{˜}}_{t - 1} {C}_{1 , c} + D {C}_{1 , d} ;$ (26)

The third basis may be agreed on in a protocol or indicated by the first apparatus.

Based on the method provided in FIG. 4, the first apparatus may receive the reference signal and send the first indication information, to indicate the at least part of first weighting coefficients, that is, indicate basis vectors at different moments, for example, coefficients of correlation between the first basis vector and the second basis vector. Each of the at least part of first weighting coefficients corresponds to one priority, and the priority of the first weighting coefficient on the (*j* + 1)^{th} second basis vector in the second basis that is associated with the (*i* + 1)^{th} first basis vector in the first basis is determined based on one or more of the following: the total quantity of first basis vectors in the first basis, the quantity of second basis vectors in the second basis, the index of the (*i +* 1)^{th} first basis vector in the first basis, or the index of the (*j +* 1)^{th} second basis vector in the second basis. Therefore, the first apparatus may report the channel state information based on the priorities of the plurality of first weighting coefficients. The first weighting coefficients are association coefficients between basis vectors at different moments, and therefore may indicate correlation between the basis vectors at the different moments. In this way, the channel state information may be reported based on the correlation between the basis vectors at the different moments, for example, the first basis vector and the second basis vector.

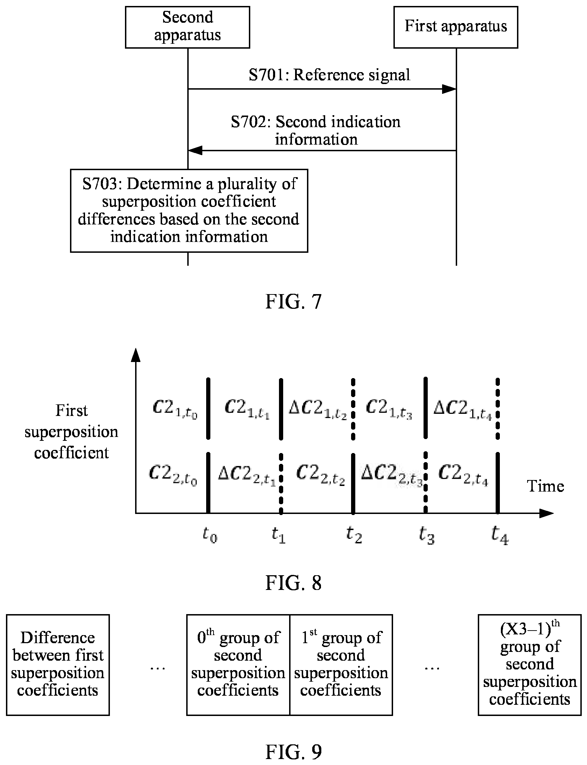

In some possible embodiments, the channel state information reported by the first apparatus to the second apparatus includes differences between superposition coefficients corresponding to spatial-frequency basis vectors at different moments. In this case, the differences between the superposition coefficients corresponding to the spatial-frequency basis vectors at the different moments may be reported based on priorities corresponding to the differences. The following provides descriptions with reference to FIG. 7. As shown in FIG. 7, the method includes the following steps.

S701: The second apparatus sends a reference signal to the first apparatus. Correspondingly, the first apparatus receives the reference signal from the second apparatus.

For implementations of the first apparatus, the second apparatus, and the reference signal, refer to the related descriptions in S401. For an implementation of S701, refer to the related descriptions of S401. Details are not described herein again.

It should be understood that the reference signal in the method provided in FIG. 7 and the reference signal in the method provided in FIG. 4 may be a same reference signal. Alternatively, the reference signal in FIG. 7 and the reference signal in FIG. 4 may be different reference signals. For example, the reference signal in FIG. 4 may be a first reference signal, and the reference signal in FIG. 7 may be a second reference signal.

S702: The first apparatus sends second indication information to the second apparatus. Correspondingly, the second apparatus receives the second indication information from the first apparatus.

The second indication information is determined by the first apparatus based on the reference signal, the second indication information indicates at least part of quantization information of a plurality of superposition coefficient differences based on *G* fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a (*g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G* , *g* is an integer, 1 ≤ *l* ≤ *v*, and *v* represents the quantity of transport layers reported by the first apparatus or the quantity of antenna ports of the first apparatus.

The *l*^{th} transport layer or antenna port of the first apparatus is the *l*^{th} transport layer or the *l*^{th} antenna port of the first apparatus. If the *l*^{th} transport layer or antenna port of the first apparatus is the *l*^{th} transport layer, *v* represents a transport layer reported by the first apparatus. If the *l*^{th} transport layer or antenna port of the first apparatus is the *l*^{th} antenna port of the first apparatus, *v* represents the quantity of antenna ports of the first apparatus.

The first superposition coefficient corresponding to each spatial-frequency basis vector in the first spatial-frequency basis at the third moment may include each element in ***C***₂ at the third moment. In this case, the first superposition coefficient corresponding to each spatial-frequency basis vector in the first spatial-frequency basis at the fourth moment may include each element in ***C***₂ at the fourth moment.

Alternatively, the first superposition coefficient corresponding to each spatial-frequency basis vector in the first spatial-frequency basis at the third moment may include each element in ***C***₂₁ at the third moment. In this case, the first superposition coefficient corresponding to each spatial-frequency basis vector in the first spatial-frequency basis at the fourth moment may include each element in ***C***₂₁ at the fourth moment.

Alternatively, the first superposition coefficient corresponding to each spatial-frequency basis vector in the first spatial-frequency basis at the third moment may include each element in ***W***₂ at the third moment. In this case, the first superposition coefficient corresponding to each spatial-frequency basis vector in the first spatial-frequency basis at the fourth moment may include each element in ***W***₂ at the fourth moment.

The first spatial-frequency basis includes at least part of spatial-frequency basis vectors in the spatial-frequency basis determined based on the reference signal. If the first spatial-frequency basis includes part of spatial-frequency basis vectors in the spatial-frequency basis determined based on the reference signal, spatial-frequency basis vectors, other than the spatial-frequency basis vectors in the first spatial-frequency basis, in the spatial-frequency basis determined based on the reference signal may constitute a second spatial-frequency basis. It should be understood that first spatial-domain bases may be the same or may be different at different moments. The spatial-frequency basis determined based on the reference signal is a spatial-frequency basis obtained by combining a spatial-domain basis vector and a frequency-domain basis vector that represent a channel matrix of the terminal.

The plurality of superposition coefficient differences satisfy a relationship shown in Formula (27): $Δ C {2}_{t ′} = C {2}_{t ′} - C {2}_{t ′ - 1} ;$ (27)

*t'* is the third moment, Δ***C***2*_{t'}* is a matrix constructed by the plurality of superposition coefficient differences, and each element is one superposition coefficient difference. ***C***2*_{t'}* is a first superposition coefficient matrix constructed by the first superposition coefficient corresponding to each spatial-frequency basis vector in the first spatial-frequency basis at the third moment, *t'* - 1 is the fourth moment, and ***C***2_{*t'*-1} is a second superposition coefficient matrix constructed by the first superposition coefficient corresponding to each spatial-frequency basis vector in the first spatial-frequency basis at the fourth moment. For different moments, the first spatial-frequency bases may be different. In this case, the second spatial-frequency bases are also different.

For ease of understanding, the following uses an example in which a superposition coefficient matrix constructed by superposition coefficients of the spatial-frequency basis determined based on the reference signal is ***C***2. As shown in FIG. 8, the superposition coefficient matrix ***C*2** is divided into two parts: a superposition coefficient matrix corresponding to a spatial-frequency basis 1 and a superposition coefficient matrix corresponding to a spatial-frequency basis 2. At a moment *t*₀, the two parts of ***C*2** are reported for the first time. In this case, the superposition coefficient matrix ***C***2_{1,*t*₀} corresponding to the spatial-frequency basis 1 and the superposition coefficient matrix ***C***2_{2,*t*₀} corresponding to the spatial-frequency basis 2 may be reported.

At a moment *t*₁, a superposition coefficient matrix ***C***2_{1,*t*₁} of the spatial-frequency basis 1 at the moment *t*₁, and a difference coefficient matrix Δ***C***2_{2,*t*₁} between a superposition coefficient matrix corresponding to the spatial-frequency basis 2 at the moment *t*₁ and the superposition coefficient matrix of the spatial-frequency basis 2 at the moment *t*₀ may be reported. In this case, *t' = t*₁, *t' -* 1 = *t*₀, the first spatial-frequency basis is the spatial-frequency basis 2, the second spatial-frequency basis is the spatial-frequency basis 1, and Δ***C***2*_{t'}*=Δ***C***2_{2,*t*₁}.

At a moment *t*₂, a difference coefficient matrix Δ***C***2_{1,*t*₂} between a superposition coefficient matrix of the spatial-frequency basis 1 at the moment *t*₂ and the superposition coefficient matrix of the spatial-frequency basis 1 at the moment *t*₁, and a superposition coefficient matrix ***C***2_{1,*t*₂} corresponding to the spatial-frequency basis 2 at the moment *t*₂ may be reported. In this case, t' = *t*₂, t' *-* 1 = *t*₁, the first spatial-frequency basis is the spatial-frequency basis 1, the second spatial-frequency basis is the spatial-frequency basis 2, and Δ***C***2*_{t'}*=Δ***C***2_{1,*t*₂}.

At a moment *t*₃, a superposition coefficient matrix ***C***2_{1,*t*₃} of the spatial-frequency basis 1 at the moment *t*₃, and a difference coefficient matrix Δ***C***2_{2,*t*₃} between a superposition coefficient matrix corresponding to the spatial-frequency basis 2 at the moment *t*₃ and the superposition coefficient matrix of the spatial-frequency basis 2 at the moment *t*₂ may be reported. In this case, *t'* = *t*₃, *t' -* 1 = *t*₂, the first spatial-frequency basis is the spatial-frequency basis 2, the second spatial-frequency basis is the spatial-frequency basis 1, and Δ***C***2*_{t'}*=Δ***C***2_{2,*t*₃}.

At a moment *t*₄, a difference coefficient matrix Δ***C***2_{1*,t*₄} between a superposition coefficient matrix of the spatial-frequency basis 1 at the moment *t*₄ and the superposition coefficient matrix of the spatial-frequency basis 1 at the moment *t*₃, and a superposition coefficient matrix ***C***2_{2*,t*₄} corresponding to the spatial-frequency basis 2 at the moment *t*₄ may be reported. In this case, t' = *t*₄, t' *-* 1 = *t*₃*,* the first spatial-frequency basis is the spatial-frequency basis 1, the second spatial-frequency basis is the spatial-frequency basis 2, and Δ***C**2_{t'}*=Δ***C***2_{1,*t*₄}*.*

The solution provided in FIG. 8 is merely used as an example. It may be understood that, at different moments, the first spatial-frequency bases may alternatively be the same. In this case, the second spatial-frequency bases may also be the same. In addition, the superposition coefficient matrix may be further divided into more parts. Details are not described herein again.

The *G* fourth basis vectors may be *G* projection basis vectors selected from a second projection basis, and the *G* fourth basis vectors may be used to quantize the plurality of superposition coefficient differences. A length of the fourth basis vector is consistent with a length of a vector constructed by the superposition coefficient difference corresponding to the *l*^{th} transport layer or antenna port of the first apparatus among the plurality of superposition coefficient differences. In other words, a quantity of elements in the fourth basis vector is equal to a quantity of elements in the vector constructed by the superposition coefficient difference corresponding to the *l*^{th} transport layer or antenna port of the first apparatus among the plurality of superposition coefficient differences.

The quantization information of the plurality of superposition coefficient differences based on the *G* fourth basis vectors, that is, a vector constructed by a superposition coefficient corresponding to each transport layer or antenna port of the first apparatus among the plurality of superposition coefficient differences, is associated with a third weighting coefficient on the *G* fourth basis vectors, that is, a projection coefficient of a projection, on the *G* fourth basis vectors, of the vector constructed by the superposition coefficient corresponding to each transport layer or antenna port of the first apparatus among the plurality of superposition coefficient differences. A matrix constructed by the projection, on the *G* fourth basis vectors, of the vector constructed by the superposition coefficient corresponding to each transport layer or antenna port of the first apparatus among the plurality of superposition coefficient differences, that is, a projection matrix, satisfies a relationship shown in Formula (28): $Δ {C}_{t ′}^{u} = {D}^{′ †} Δ C {2}_{t ′} ;$ (28)

***D'*** is a matrix constructed by the *G* fourth basis vectors, ***D**'*^{†} represents a pseudo-inverse of ***D'**,* and $Δ {C}_{t ′}^{u}$ is a quantization matrix constructed by the quantization information of the plurality of superposition coefficient differences based on the *G* fourth basis vectors.

Each element in the foregoing projection matrix may also be referred to as a difference coefficient.

In a possible implementation solution, the priority of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the ( *g* + 1 )^{th} fourth basis vector that is associated with the superposition coefficient difference corresponding to the *l*^{th} transport layer or antenna port of the first apparatus among the plurality of superposition coefficient differences.

The priority value of the quantization information on the *(g* + 1)^{th} fourth basis vector that is associated with the superposition coefficient difference corresponding to the *l*^{th} transport layer or antenna port of the first apparatus among the plurality of superposition coefficient differences is determined based on an index of the transport layer and an index of the *(g* + 1)^{th} fourth basis vector.

The index of the *l*^{th} transport layer may be *l* or *l* + 1. For example, an index of a 1^{st} transport layer may be 0 or 1. Similarly, the index of the *(g* + 1)^{th} fourth basis vector may be *g* or *g* + 1. For example, an index of a 1^{st} fourth basis vector may be 0 or 1.

In a possible implementation solution, the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences ∝ *Pri*(*l, g*). In other words, a priority value of the quantization information on the ( *g* + 1 )^{th} fourth basis vector that is associated with the superposition coefficient difference corresponding to the *l*^{th} transport layer or antenna port of the first apparatus among the plurality of superposition coefficient differences is positively correlated with a value of *Pri*(*l, g);* or a priority value of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a value of *Pri*(*l, g).*

The priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies a relationship shown in Formula (29): $Pri \left(l, g\right) = vg + l ;$ (29)

*Pri*(*l, g)* represents the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences.

Alternatively, the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies a relationship shown in Formula (30): $Pri \left(l, g\right) = 2 vg + l ;$ (30)

Alternatively, the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies a relationship shown in Formula (31): $Pri \left(l, g\right) = {vg}^{2} + l ;$ (31)

It should be understood that, among the plurality of superposition coefficient differences, each superposition coefficient difference corresponds to one priority. The priority of each superposition coefficient difference may indicate a coefficient reporting sequence of the superposition coefficient difference. A higher priority of the superposition coefficient difference indicates that the superposition coefficient difference is reported earlier, and a lower priority of the superposition coefficient difference indicates that the superposition coefficient difference is reported later.

In this way, a priority is calculated for each piece of quantization information, and the quantization information may be reported based on the priority. For example, information that is more important to the channel state information may be preferentially reported, so that accuracy of the reported channel state information can be improved.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

This can make information in the second indication information more complete, thereby improving accuracy of the reported channel state information.

For an implementation of the second spatial-domain basis, refer to the related descriptions of FIG. 8. Details are not described herein again. The second superposition coefficient may also be referred to as a non-difference coefficient.

In a possible implementation solution, the priorities of the quantization information of the plurality of superposition coefficient differences based on the G fourth basis vectors all are higher than a priority of any one of the second superposition coefficients corresponding to the at least part of spatial-frequency basis vectors in the second spatial-frequency basis.

In this way, information that is more important to the channel state information may be preferentially reported, thereby improving accuracy of the reported channel state information. It should be understood that there is a correspondence between a priority of quantization information corresponding to one superposition coefficient difference and a priority of a superposition coefficient corresponding to the superposition coefficient difference.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis.

The priority value of the second superposition coefficient corresponding to the spatial-frequency basis vector in the second spatial-frequency basis is determined based on a spatial-frequency vector including an index of the *l*^{th} transport layer or antenna port of the first apparatus, an index of the *k_{f}*^{th} frequency-domain basis vector, and an index of the *kₛ*^{th} spatial-domain basis vector. An index of a *k_{f}*^{th} spatial-frequency basis vector may be *k_{f}* or *k_{f} +* 1. For example, an index of a 1^{st} spatial-frequency basis vector may be 0 or 1. An index of a *kₛ*^{th} spatial-frequency basis vector may be *kₛ* or *kₛ* + 1. For example, an index of a 1^{st} spatial-frequency basis vector may be 0 or 1.

In a possible implementation solution, the priority value of the second superposition coefficient corresponding to the spatial-frequency basis vector in the second spatial-frequency basis ∝ *Pri*(*l, kₛ, k_{f}*). In other words, the priority value of the second superposition coefficient corresponding to the spatial-frequency basis vector in the second spatial-frequency basis is positively correlated with a value of *Pri*(*l*, *kₛ, k_{f}*); or the priority value of the second superposition coefficient corresponding to the spatial-frequency basis vector in the second spatial-frequency basis is negatively correlated with a value of *Pri*(*l, kₛ, k_{f}*).

A priority value of a second superposition coefficient corresponding to a spatial-frequency vector including a *k_{f}*^{th} frequency-domain basis vector and a *kₛ*^{th} spatial-domain basis vector on the *l*^{th} transport layer or antenna port of the first apparatus in the second spatial-frequency basis satisfies a relationship shown in Formula (32): $Pri \left(l, {k}_{s}, {k}_{f}\right) = {vK}_{s} {k}_{f} + {υk}_{s} + l ;$ (32)

*l* represents the index of the transport layer or the antenna port of the first apparatus, *Pri*(*l*, *kₛ, k_{f}*) represents a priority value of a superposition coefficient corresponding to a spatial-frequency basis vector including a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a total quantity of spatial-domain basis vectors, and *kₛ, k_{f}* and *Kₛ* all are integers.

In this way, a priority is calculated for each second superposition coefficient, and the second superposition coefficient may be reported based on the priority. For example, information that is more important to the channel state information may be preferentially reported, so that accuracy of the reported channel state information can be improved.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis.

The priority value of the second superposition coefficient corresponding to the spatial-frequency basis vector in the second spatial-frequency basis is determined based on an index of the transport layer and an index of the spatial-frequency basis vector.

In a possible implementation solution, the priority value of the second superposition coefficient corresponding to the spatial-frequency basis vector in the second spatial-frequency basis ∝ *Pri*(*l, q*). In other words, the priority value of the second superposition coefficient corresponding to the spatial-frequency basis vector in the second spatial-frequency basis is positively correlated with a value of *Pri*(*l, q);* or the priority value of the second superposition coefficient corresponding to the spatial-frequency basis vector in the second spatial-frequency basis is negatively correlated with a value of *Pri*(*l, q).*

A priority value of a superposition coefficient corresponding to a *(q* + 1)^{th} spatial-frequency basis vector satisfies a relationship shown in Formula (33): $Pri \left(l, q\right) = qv + l ;$ (33)

*Pri*(*l, q)* represents the priority value of the superposition coefficient corresponding to the *(q* + 1)^{th} spatial-frequency basis vector in superposition coefficients corresponding to the first apparatus and the second apparatus, and *q* is an integer.

An index of the (*q*+1)^{th} spatial-frequency basis vector may be *q* or *q* + 1. For example, an index of a 1^{st} spatial-frequency basis vector may be 0 or 1. In this way, a priority is calculated for each second superposition coefficient, and the second superposition coefficient may be reported based on the priority. For example, information that is more important to the channel state information may be preferentially reported, so that accuracy of the reported channel state information can be improved.

In this embodiment of this application, the plurality of superposition coefficient differences may be grouped into one group.

In addition, in this embodiment of this application, a plurality of second superposition coefficients corresponding to each spatial-frequency basis vector in the second spatial-frequency basis at the third moment may be grouped into a plurality of groups below. For example, as shown in FIG. 9, the plurality of second superposition coefficients are sorted in ascending order of priority values, and then are sequentially grouped into *X*3 groups: a 0^{th} group, a 1^{st} group, ..., and an (*X*3 - 1)^{th} group. *X*3 is an integer.

In a possible implementation, each group of second superposition coefficients includes $\left⌈{K}_{NZ}/X3\right⌉$ second superposition coefficients. A priority of any second superposition coefficient in the *x*3'^{th} group is higher than priorities of all second superposition coefficients in the (*x*3' + 1)^{th} group. *K_{NZ}* is a total quantity of second superposition coefficients. *K_{NZ}* is an integer. A priority of a group including a difference between first superposition coefficients is greater than a priority of any group including a second superposition coefficient.

S703: The second apparatus determines the plurality of superposition coefficient differences based on the second indication information.

In a possible implementation solution, the first apparatus may determine the plurality of superposition coefficient differences based on the *G* fourth basis vectors. In this case, the plurality of superposition coefficient differences determined by the second apparatus satisfy a relationship shown in Formula (34): $Δ C {2}_{t ′}^{′} = D ′ Δ {C}_{t ′}^{u ′} ;$ (34) $Δ C {2}_{t ′}^{′}$ is a matrix constructed by at least part of the plurality of superposition coefficient differences determined by the second apparatus. $Δ {C}_{t ′}^{u ′}$ is a matrix constructed by the at least part of the quantization information of the plurality of superposition coefficient differences based on the *G* fourth basis vectors.

It should be understood that $Δ C {2}_{t ′}^{′}$ may further satisfy a relationship shown in Formula (35): $Δ C {2}_{t ′}^{′} \approx Δ C {2}_{t ′} ;$ (35)

Δ***C***2*_{t'}* satisfies a relationship shown in Formula (36): $Δ C {2}_{t ′} \approx D ′ Δ {C}_{t ′}^{u} ;$ (36)

In this case, a matrix ***C̃***2*_{t'}* constructed by first superposition coefficients that correspond to spatial-frequency basis vectors in the first spatial-frequency basis at the third moment and that are determined by the second apparatus based on the plurality of superposition coefficient differences satisfies a relationship shown in Formula (37): ${C}^{˜} {2}_{t ′} = Δ C {2}_{t}^{′} + {C}^{˜} {2}_{t ′ - 1} = D ′ Δ {C}_{t ′}^{u} + {C}^{˜} {2}_{t ′ - 1} \approx C {2}_{t ′} ;$ (37)

***C̃***2_{*t'*-1} is a matrix constructed by first superposition coefficients that correspond to spatial-frequency basis vectors in the first spatial-frequency basis at the fourth moment and that are received by the second apparatus, that is, ***C***2_{*t'*-1}.

Alternatively, ***C̃***2_{*t'*-1} is a matrix constructed by all first superposition coefficients at the fourth moment that are determined by the second apparatus based on the plurality of superposition coefficient differences. In this case, a determining principle of ***C̃***2_{*t'*-1} is similar to that of ***C̃***2*_{t'}.* Details are not described herein again.

Each element in ***C̃***2_{*t'*-1} corresponds to one superposition coefficient, and one element in ***C̃***2*_{t'}* corresponds to one superposition coefficient difference.

Based on the method provided in FIG. 7, the first apparatus may receive the reference signal and send the second indication information, to indicate quantization information of a difference between respective first superposition coefficients corresponding to a spatial-frequency basis at different moments. The quantization information in the second indication information is determined based on a priority corresponding to each piece of quantization information, and the priority of each piece of quantization information is related to a quantity of layers corresponding to a channel matrix between the first apparatus and the second apparatus, *G,* and the quantity of transport layers reported by the first apparatus or the quantity of antenna ports of the first apparatus. In this way, the first apparatus may report the quantization information based on the priority, to report the channel state information based on a relationship between first superposition coefficients at different moments.

In some possible embodiments, channel state information reporting may be implemented with reference to the solution provided in FIG. 4 and the solution provided in FIG. 7. For example, the first apparatus may send the first indication information to the second apparatus at the fifth moment, that is, perform S402 at the fifth moment. The first apparatus sends the second indication information to the second apparatus at the sixth moment, that is, performs S402 at the sixth moment.

The fifth moment and the sixth moment may be the same or may be different. The fifth moment and the first moment may be the same or may be different. The sixth moment and the third moment may be the same or may be different.

Based on the method provided in FIG. 7, the first apparatus may receive the reference signal and send the second indication information, to indicate quantization information of a superposition coefficient difference, that is, quantization information of a difference between first superposition coefficients corresponding to a spatial-frequency basis at different moments. The quantization information in the second indication information is determined based on a priority corresponding to each piece of quantization information, and the priority of each piece of quantization information is related to *G* and the quantity of transport layers reported by the first apparatus or the quantity of antenna ports of the first apparatus. In this way, the first apparatus may report the quantization information based on the priority of the quantization information of the superposition coefficient difference, that is, report channel state information based on a relationship between first superposition coefficients at different moments.

It should be understood that the second apparatus may restore the channel state information based on all the first superposition coefficients at the third moment.

In some possible embodiments, a long-period basis may be reported by using the solution provided in FIG. 4, and a short-period superposition coefficient may be reported by using conventional technologies. In this case, the first apparatus may send the first indication information to the second apparatus at the fifth moment, that is, perform S402 at the fifth moment. The first apparatus sends third indication information at the sixth moment. Correspondingly, the second apparatus receives the third indication information from the first apparatus. The third indication information indicates a first superposition coefficient corresponding to each spatial-frequency basis vector in a third spatial-frequency basis at the third moment.

For example, when a space domain and a frequency domain in a codebook are represented by vectors in respective feature subspace bases, the first superposition coefficient corresponding to the third moment may include an element in ***C***₂ in Formula (1) or Formula (2). Alternatively, when a codebook is represented by a basis vector in a feature subspace basis in joint spatial-frequency domain, the first superposition coefficient corresponding to the third moment may include an element in ***C***₂₁ in Formula (3) or Formula (4).

In some possible embodiments, a long-period basis may be reported by using conventional technologies, and a short-period coefficient may be reported by using the solution provided in FIG. 7. In this case, the first apparatus sends fourth indication information at the first moment. Correspondingly, the second apparatus receives the fourth indication information from the first apparatus. The fourth indication information indicates a third superposition coefficient corresponding to each spatial-frequency basis vector in the spatial-frequency basis determined based on the reference signal. The first apparatus sends the second indication information to the second apparatus at the sixth moment, that is, performs S402 at the sixth moment.

The third superposition coefficient may include a superposition coefficient of a spatial-domain basis vector in a spatial-domain basis and a frequency-domain superposition coefficient of a frequency-domain basis vector in a frequency-domain basis. For example, when the channel matrix is shown in Formula (1) or Formula (2), for example, the superposition coefficient of the spatial-domain basis vector in the spatial-domain basis may be an element in ***C***₁ in Formula (1) or an element in ${C}_{1}^{′}$ in Formula (2), and the frequency-domain superposition coefficient of the frequency-domain basis vector in the frequency-domain basis may be an element in ***C*₃** in Formula (1) or Formula (2). Alternatively, when the channel matrix is shown in Formula (3) or Formula (4), the third superposition coefficient may include a spatial-frequency superposition coefficient, for example, an element in ***C***₁₁ in Formula (3), or an element in ${C}_{11}^{′}$ in Formula (4).

In this embodiment of this application, the second apparatus may obtain the channel state information based on the first basis, another basis, and the short-period reporting coefficient.

It should be understood that a weighting coefficient in embodiments of this application, for example, a first weighting coefficient, a second weighting coefficient, or a third weighting coefficient, may be indicated by an amplitude and/or a phase corresponding to the weighting coefficient. In other words, one weighting coefficient corresponds to one amplitude and/or one phase. A superposition coefficient in embodiments of this application, for example, a first superposition coefficient, a second superposition coefficient, or a third superposition coefficient, may be indicated by an amplitude and/or a phase corresponding to the superposition coefficient. In other words, one superposition coefficient corresponds to one amplitude and/or one phase.

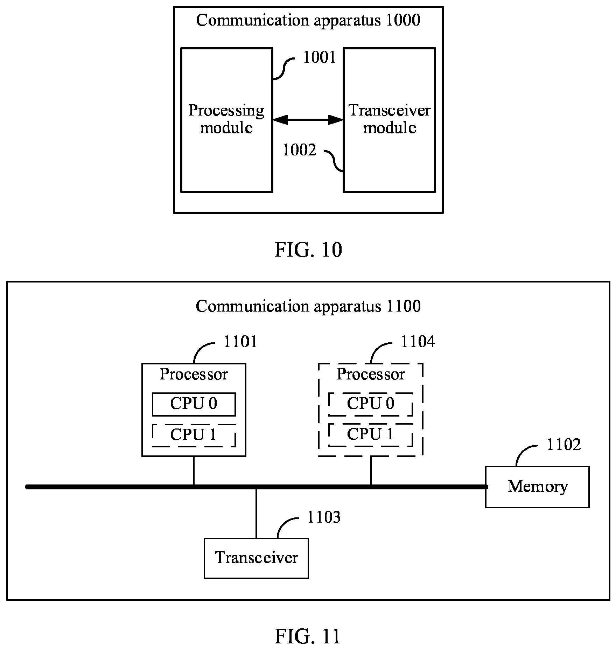

The methods provided in embodiments of this application are described in detail above with reference to FIG. 4 to FIG. 9. Communication apparatuses configured to perform the methods provided in embodiments of this application are described below in detail with reference to FIG. 10 and FIG. 11.

For example, FIG. 10 is a diagram 1 of a structure of a communication apparatus according to an embodiment of this application. As shown in FIG. 10, the communication apparatus 1000 includes a processing module 1001 and a transceiver module 1002. For ease of description, FIG. 10 merely shows main components of the communication apparatus.

In some embodiments, the communication apparatus 1000 may be used in the communication system shown in FIG. 2, and perform a function of the first apparatus in the method shown in FIG. 4.

The transceiver module 1002 is configured to receive a reference signal from a second apparatus. The processing module 1001 is configured to generate first indication information. The transceiver module 1002 is further configured to send the first indication information to the second apparatus. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the communication apparatus 1000 at a second moment, and the second moment is earlier than the first moment. Each of the at least part of first weighting coefficients corresponds to one priority, and a priority of a first weighting coefficient on a (*j* + 1)^{th} second basis vector in the second basis that is associated with an (*i +* 1)^{th} first basis vector in the first basis is determined based on one or more of the following: a total quantity *M* of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, where 0 ≤ *i < M, 0* ≤ *j < M̃*, and *i, j, M* and *M̃* all are integers.

In a possible implementation solution, the priority of the first weighting coefficient on the (*j* + 1)^{th} second basis vector in the second basis that is associated with the *(i* + 1)^{th} first basis vector in the first basis is negatively correlated with a priority value of the first weighting coefficient on the *(j* + 1)^{th} second basis vector in the second basis that is associated with the *(i* + 1)^{th} first basis vector in the first basis. The priority value of the first weighting coefficient on the (*j* + 1)^{th} second basis vector in the second basis that is associated with the (*i* + 1)^{th} first basis vector in the first basis satisfies one of the following relationships: *Pri*(*i, j*) *= M̃i + f*(*j*); or *Pri(i,j) = M̃i*² *+ f*(*j*)*,* where *Pri*(*i, j*) represents the priority value of the first weighting coefficient on the *(j* + 1)^{th} second basis vector in the second basis that is associated with the (*i +* 1)^{th} first basis vector in the first basis, and *f*(*j*) increases or decreases with *j.*

In a possible implementation solution, the first indication information further indicates at least part of a plurality of second weighting coefficients and a third basis, and the second basis, the first weighting coefficients corresponding to the second basis, the third basis, and the at least part of second weighting coefficients are used to determine the first basis. This can make information in the first indication information more complete, thereby improving accuracy of the reported channel state information.

In a possible implementation solution, a priority of each of the second weighting coefficients is lower than a priority of any first weighting coefficient. In this way, information that is more important to the channel state information may be preferentially reported, thereby improving accuracy of the reported channel state information.

In a possible implementation solution, a priority of a second weighting coefficient on a *(k* + 1)^{th} third basis vector in the third basis that is associated with a first vector corresponding to the (*i* + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector includes a difference between the (*i* + 1)^{th} first basis vector and a projection of the *(i* + 1)^{th} first basis vector on the second basis, and *k* is an integer.

In a possible implementation solution, the priority of the second weighting coefficient on the (*k* + 1)^{th} third basis vector in the third basis that is associated with the first vector corresponding to the *(i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the (*k* + 1)^{th} third basis vector in the third basis that is associated with the first vector corresponding to the (*i* + 1)^{th} first basis vector in the first basis satisfies the following relationship: *Pri*(*i, k*) = *K*1*ϕ*(*i*) *+ f'*(*k*), where *Pri(i, k)* represents the priority value of the second weighting coefficient on the (*k +* 1)^{th} third basis vector in the third basis that is associated with the first vector corresponding to the *(i* + 1)^{th} first basis vector in the first basis, *K*1 is the total quantity of third basis vectors in the third basis, *ϕ*(*i*) increases or decreases with *i, f'*(*k*) increases or decreases with *k,* 0 ≤ *i < M,* 0 ≤ *k < K*1, and *K*1 is an integer.

In a possible implementation solution, the first basis vector is a spatial-domain basis vector, and the second basis vector is a spatial-domain basis vector; or the first basis vector is a frequency-domain basis vector, and the second basis vector is a frequency-domain basis vector. When the first basis vector is a spatial-domain basis vector, and the second basis vector is a spatial-domain basis vector, a spatial-domain basis may be reported. When the first basis vector is a frequency-domain basis vector, and the second basis vector is a frequency-domain basis vector, a frequency-domain basis vector may be reported.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient. The first vector corresponding to the (*i* + 1)^{th} first basis vector includes a difference between the *(i* + 1)^{th} first basis vector and a projection of the (*i* + 1)^{th} first basis vector on the second basis, and both s and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (i + 1)^{th} first basis vector in the first basis satisfies the following relationship: *Pri(s, f , i*) *= LMπ*(*f*) *+ Lϕ*(*i*) + s, where *Pri(s, f, i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f, ϕ*(*i*) increases or decreases with *i*, 0 ≤ *f < F, F* is the total quantity of frequency-domain basis vectors corresponding to the third basis, 0 ≤ *s < L,* and both *L* and *F* are integers.

In a possible implementation solution, a priority of a second weighting coefficient on a third basis vector that corresponds to an *(s* + 1)^{th} spatial-domain basis vector and an (*f* + 1)^{th} frequency-domain basis vector in the third basis and that is associated with a first vector corresponding to the *(i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis. The first vector corresponding to the *(i* + 1)^{th} first basis vector includes a difference between the (*i* + 1)^{th} first basis vector and a projection of the (*i* + 1)^{th} first basis vector on the second basis, and both s and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri(s, f , i*) *= LFϕ*(*i*) *+ Lπ*(*f*) *+* s, where *Pri(s, f, i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the quantity of spatial-domain basis vectors corresponding to the third basis, *π*(*f*) is a function of *f , ϕ*(*i*) increases or decreases with *i*, 0 ≤ *f < F, F* is the total quantity of frequency-domain basis vectors corresponding to the third basis, 0 ≤ s *< L,* and both *L* and *F* are integers.

In a possible implementation solution, the first basis vector is a spatial-frequency basis vector, and the second basis vector is a spatial-frequency basis vector.

The transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is caused to perform a function of the first apparatus in the method shown in FIG. 4.

It should be understood that the processing module 1001 in the communication apparatus 1000 may be implemented by a processor or a processor-related circuit component, and may be a processor or a processing unit; and the transceiver module 1002 may be implemented by a transceiver or a transceiver-related circuit component, and may be a transceiver or a transceiver unit.

It should be noted that the communication apparatus 1000 may be a terminal or a network device, or may be a chip (system) or another part or component that may be disposed in the terminal or the network device, or may be an apparatus including the terminal or the network device. This is not limited in this application.

In addition, for technical effects of the communication apparatus 1000, refer to the technical effects of the method shown in FIG. 4. Details are not described herein again.

In some other embodiments, the communication apparatus 1000 may be used in the communication system shown in FIG. 2, and perform a function of the second apparatus in the method shown in FIG. 4.

The processing module 1001 is configured to generate a reference signal. The transceiver module 1002 is configured to send the reference signal. The transceiver module 1002 is further configured to receive first indication information from a first apparatus. The first indication information indicates at least part of a plurality of first weighting coefficients associated with each first basis vector in a first basis and each second basis vector in a second basis. The first basis is determined by the first apparatus at a first moment based on the reference signal, the second basis is a basis reported by the first apparatus at a second moment, and the second moment is earlier than the first moment. Each of the at least part of first weighting coefficients corresponds to one priority, and a priority of a first weighting coefficient on a *(j* + 1)^{th} second basis vector in the second basis that is associated with an (*i* + 1)^{th} first basis vector in the first basis is determined based on one or more of the following: a total quantity *M* of first basis vectors in the first basis, a quantity *M̃* of second basis vectors in the second basis, an index of the (*i* + 1)^{th} first basis vector in the first basis, or an index of the *(j* + 1)^{th} second basis vector in the second basis, where 0 ≤ *i < M, 0* ≤ *j < M̃*, and *M, M̃, i* and *j* all are integers. The processing module 1001 is further configured to determine the first basis based on the first indication information.

In a possible implementation solution, the priority of the first weighting coefficient on the (*j* + 1)^{th} second basis vector in the second basis that is associated with the *(i* + 1)^{th} first basis vector in the first basis is negatively correlated with a priority value of the first weighting coefficient on the *(j* + 1)^{th} second basis vector in the second basis that is associated with the *(i* + 1)^{th} first basis vector in the first basis. The priority value of the first weighting coefficient on the (*j* + 1)^{th} second basis vector in the second basis that is associated with the *(i* + 1)^{th} first basis vector in the first basis satisfies one of the following relationships: *Pri*(*i, j*) *= M̃i + f*(*j*); or *Pri*(*i, j*) *= M̃i*² *+ f*(*j*), where *Pri*(*i, j*) represents the priority value of the first weighting coefficient on the (j + 1)^{th} second basis vector in the second basis that is associated with the (i *+* 1)^{th} first basis vector in the first basis, and *f*(*j*) increases or decreases with *j.*

In a possible implementation solution, the first indication information further indicates at least part of a plurality of second weighting coefficients and a third basis, and the second basis, the first weighting coefficients corresponding to the second basis, the third basis, and the at least part of second weighting coefficients are used to determine the first basis. This can make information in the first indication information more complete, thereby improving accuracy of the reported channel state information.

In a possible implementation solution, a priority of each of the second weighting coefficients is lower than a priority of any first weighting coefficient. In this way, information that is more important to the channel state information may be preferentially reported, thereby improving accuracy of the reported channel state information.

In a possible implementation solution, a priority of a second weighting coefficient on a *(k* + 1)^{th} third basis vector in the third basis that is associated with a first vector corresponding to the (*i* + 1)^{th} first basis vector in the first basis is related to a total quantity of third basis vectors in the third basis, the first basis vector corresponding to the second weighting coefficient, and the third basis vector corresponding to the second weighting coefficient. The first vector corresponding to the (*i* + 1)^{th} first basis vector includes a difference between the (*i* + 1)^{th} first basis vector and a projection of the *(i* + 1)^{th} first basis vector on the second basis, and *k* is an integer.

In a possible implementation solution, the priority of the second weighting coefficient on the ( *k* + 1 )^{th} third basis vector in the third basis that is associated with the first vector corresponding to the (*i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the *(k* + 1)^{th} third basis vector in the third basis that is associated with the first vector corresponding to the *(i* + 1)^{th} first basis vector in the first basis satisfies the following relationship: *Pri*(*i, k*) *= K*1*ϕ*(*i*) *+ f*'(*k*), where *Pri(i, k)* represents the priority value of the second weighting coefficient on the (*k +* 1)^{th} third basis vector in the third basis that is associated with the first vector corresponding to the *(i* + 1)^{th} first basis vector in the first basis, *K*1 is the total quantity of third basis vectors in the third basis, *ϕ*(*i*) increases or decreases with *i, f'*(*k*) increases or decreases with *k,* 0 ≤ *i < M,* 0 ≤ *k < K*1, and *K*1 is an integer.

In a possible implementation solution, the first basis vector is a spatial-domain basis vector, and the second basis vector is a spatial-domain basis vector; or the first basis vector is a frequency-domain basis vector, and the second basis vector is a frequency-domain basis vector. When the first basis vector is a spatial-domain basis vector, and the second basis vector is a spatial-domain basis vector, a spatial-domain basis may be reported. When the first basis vector is a frequency-domain basis vector, and the second basis vector is a frequency-domain basis vector, a frequency-domain basis vector may be reported.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis is related to one or more of the following: a quantity of spatial-domain basis vectors corresponding to the third basis, a total quantity of first basis vectors in the first basis, the frequency-domain basis vector corresponding to the second weighting coefficient, or the first basis vector corresponding to the second weighting coefficient. The first vector corresponding to the *(i* + 1)^{th} first basis vector includes a difference between the (*i* + 1)^{th} first basis vector and a projection of the (*i +* 1)^{th} first basis vector on the second basis, and both *s* and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri(s, f , i*) *= LMπ*(*f*) *+ Lϕ*(*i*) + s, where *Pri(s, f, i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the total quantity of spatial-domain basis vectors corresponding to the third basis, *π*(*f*) is a function of *f , ϕ*(*i*) increases or decreases with *i*, 0 ≤ *f < F, F* is the total quantity of frequency-domain basis vectors corresponding to the third basis, 0 ≤ *s* < *L*, and both *L* and *F* are integers.

In a possible implementation solution, a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the *(i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis. The priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a total quantity of spatial-domain basis vectors corresponding to the third basis, the frequency-domain basis vector corresponding to the second weighting coefficient, the first basis vector corresponding to the second weighting coefficient, or a total quantity of frequency-domain basis vectors corresponding to the third basis. The first vector corresponding to the *(i* + 1)^{th} first basis vector includes a difference between the (*i* + 1)^{th} first basis vector and a projection of the (*i* + 1)^{th} first basis vector on the second basis, and both s and *f* are integers.

In a possible implementation solution, the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: *Pri(s, f , i*) *= LFϕ*(*i*) *+ Lπ*(*f*) *+* s, where *Pri(s, f, i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis, *L* is the quantity of spatial-domain basis vectors corresponding to the third basis, *π*(*f*) is a function of *f , ϕ*(*i*) increases or decreases with *i*, 0 ≤ *f < F, F* is the total quantity of frequency-domain basis vectors corresponding to the third basis, 0 ≤ s < *L*, and both *L* and *F* are integers.

In a possible implementation solution, the first basis vector is a spatial-frequency basis vector, and the second basis vector is a spatial-frequency basis vector.

The transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is caused to perform a function of the second apparatus in the method shown in FIG. 4.

It should be understood that the processing module 1001 in the communication apparatus 1000 may be implemented by a processor or a processor-related circuit component, and may be a processor or a processing unit; and the transceiver module 1002 may be implemented by a transceiver or a transceiver-related circuit component, and may be a transceiver or a transceiver unit.

It should be noted that the communication apparatus 1000 may be a terminal or a network device, or may be a chip (system) or another part or component that may be disposed in the terminal or the network device, or may be an apparatus including the terminal or the network device. This is not limited in this application.

In addition, for technical effects of the communication apparatus 1000, refer to the technical effects of the method shown in FIG. 4. Details are not described herein again.

In some other embodiments, the communication apparatus 1000 may be used in the communication system shown in FIG. 2, and perform a function of the first apparatus in the method shown in FIG. 7.

The transceiver module 1002 is configured to receive a reference signal from a second apparatus. The processing module 1001 is further configured to generate second indication information. The transceiver module 1002 is further configured to send the second indication information to the second apparatus. The second indication information indicates at least part of quantization information of a plurality of superposition coefficient differences based on G fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and G is an integer greater than 0. The at least part of the quantization information of the plurality of superposition coefficient differences based on the G fourth basis vectors is related to priorities of the quantization information of the plurality of superposition coefficient differences based on the G fourth basis vectors, and a priority of quantization information on a ( *g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the communication apparatus 1000 or a quantity of antenna ports of the first apparatus, where 0 ≤ *g < G, 1* ≤ *l* ≤ *v, v* represents the quantity of transport layers reported by the communication apparatus 1000 or the quantity of antenna ports of the first apparatus, and *g*, *l* and *v* all are integers.

In a possible implementation solution, the priority of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the ( *g* + 1 )^{th} fourth basis vector that is associated with the superposition coefficient difference corresponding to the *l*^{th} transport layer or antenna port of the first apparatus among the plurality of superposition coefficient differences. The priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l*; *Pri*(*l, g*) *= 2vg + l*; or *Pri*(*l, g) = vg² + l,* where *Pri*(*l, g)* represents the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences, and *v* is the quantity of transport layers reported by the communication apparatus 1000 or the quantity of antenna ports of the first apparatus.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

In a possible implementation solution, the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f}*^{th} frequency-domain basis vector and a *kₛ*^{th} spatial-domain basis vector on the *l*^{th} transport layer or antenna port of the first apparatus in the second spatial-frequency basis satisfies the following relationship: *Pri*(*l*, *kₛ, k_{f}*) *= vKₛk_{f} + υkₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the communication apparatus 1000 and the second apparatus and a *k_{f}*^{th} frequency-domain basis vector in a frequency-domain basis between the communication apparatus 1000 and the second apparatus, *v* is the quantity of transport layers reported by the communication apparatus 1000 or the quantity of antenna ports of the first apparatus, *Kₛ* is a total quantity of spatial-domain basis vectors, and *kₛ, k_{f}, Kₛ* and *Kₛ* all are integers.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a *(q* + 1)^{th} spatial-frequency basis vector satisfies the following relationship: *Pri*(*l, a*) *= qv + l,* where *l* represents the index of the transport layer or the antenna port of the first apparatus, *Pri*(*l, q)* represents the priority value of the superposition coefficient corresponding to the (*q* + 1)^{th} spatial-frequency basis vector on the *l*^{th} transport layer or antenna port of the first apparatus in the second spatial-frequency basis, and *q* is an integer.

The transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is caused to perform a function of the first apparatus in the method shown in FIG. 7.

It should be understood that the processing module 1001 in the communication apparatus 1000 may be implemented by a processor or a processor-related circuit component, and may be a processor or a processing unit; and the transceiver module 1002 may be implemented by a transceiver or a transceiver-related circuit component, and may be a transceiver or a transceiver unit.

It should be noted that the communication apparatus 1000 may be a terminal or a network device, or may be a chip (system) or another part or component that may be disposed in the terminal or the network device, or may be an apparatus including the terminal or the network device. This is not limited in this application.

In addition, for technical effects of the communication apparatus 1000, refer to the technical effects of the method shown in FIG. 7. Details are not described herein again.

In some other embodiments, the communication apparatus 1000 may be used in the communication system shown in FIG. 2, and perform a function of the second apparatus in the method shown in FIG. 7.

The processing module 1001 is configured to generate a reference signal. The transceiver module 1002 is configured to send the reference signal to a first apparatus. The transceiver module 1002 is further configured to receive second indication information from the first apparatus. The second indication information is determined by the first apparatus based on the reference signal, the second indication information indicates at least part of quantization information of a plurality of superposition coefficient differences based on G fourth basis vectors, the plurality of superposition coefficient differences include a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis includes at least part of spatial-frequency basis vectors in a spatial-frequency basis determined based on the reference signal, the fourth moment is earlier than the third moment, and *G* is an integer greater than 0. The at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a ( *g* + 1 )^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, where 0 ≤ *g* < *G,* 1 ≤ *l* ≤ *v, v* represents the quantity of transport layers reported by the first apparatus or the quantity of antenna ports of the first apparatus, and *g*, *l* and *v* all are integers. The processing module 1001 is further configured to determine the plurality of superposition coefficient differences based on the second indication information.

In a possible implementation solution, the priority of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the ( *g* + 1 )^{th} fourth basis vector that is associated with the superposition coefficient difference corresponding to the *l*^{th} transport layer or antenna port of the first apparatus among the plurality of superposition coefficient differences. The priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies one of the following relationships: *Pri*(*l, g*) *= vg + l*; *Pri*(*l, g*) *= 2vg + l*; or *Pri*(*l, g*) *= vg²* + *l,* where *Pri*(*l, g)* represents the priority value of the quantization information on the *(g* + 1)^{th} fourth basis vector that is associated with the superposition coefficient difference corresponding to the *l*^{th} transport layer or antenna port of the first apparatus.

In a possible implementation solution, the second indication information further indicates second superposition coefficients corresponding to at least part of spatial-frequency basis vectors in a second spatial-frequency basis, the second spatial-frequency basis includes a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

In a possible implementation solution, the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector including a *k_{f}*^{th} frequency-domain basis vector and a *kₛ*^{th} spatial-domain basis vector on the *l*^{th} transport layer or antenna port of the first apparatus in the second spatial-frequency basis satisfies the following relationship: *Pri*(*l*, *kₛ, k_{f}*) = *vKₛk_{f} + vkₛ + l,* where *l* represents the index of the transport layer or the antenna port of the first apparatus, *Pri*(*l, kₛ, k_{f}*) represents a priority value of a superposition coefficient corresponding to a spatial-frequency basis vector including a *kₛ*^{th} spatial-domain basis vector in a spatial-domain basis between the first apparatus and the communication apparatus 1000 and a *k_{f}*^{th} frequency-domain basis vector in a frequency-domain basis between the first apparatus and the communication apparatus 1000, *Kₛ* is a total quantity of spatial-domain basis vectors, and *kₛ, k_{f}* and *Kₛ* all are integers.

In a possible implementation solution, a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a (*q* + 1)^{th} spatial-frequency basis vector satisfies the following relationship: *Pri*(*l, q) = qv + l,* where *l* represents the index of the transport layer or the antenna port of the first apparatus, *Pri*(*l, q*) represents the priority value of the superposition coefficient corresponding to the (*q* + 1)^{th} spatial-frequency basis vector on the *l*^{th} transport layer or antenna port of the first apparatus in the second spatial-frequency basis, and *q* is an integer.

The transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is caused to perform a function of the second apparatus in the method shown in FIG. 7.

It should be understood that the processing module 1001 in the communication apparatus 1000 may be implemented by a processor or a processor-related circuit component, and may be a processor or a processing unit; and the transceiver module 1002 may be implemented by a transceiver or a transceiver-related circuit component, and may be a transceiver or a transceiver unit.

It should be noted that the communication apparatus 1000 may be a terminal or a network device, or may be a chip (system) or another part or component that may be disposed in the terminal or the network device, or may be an apparatus including the terminal or the network device. This is not limited in this application.

In addition, for technical effects of the communication apparatus 1000, refer to the technical effects of the method shown in FIG. 7. Details are not described herein again.

For example, FIG. 11 is a diagram 2 of a structure of a communication apparatus according to an embodiment of this application. The communication apparatus may be a terminal or a network device, or may be a chip (system) or another part or component that may be disposed in the terminal or the network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes the components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing unit, CPU), or may be an application-specific integrated circuit (application-specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1101 may execute various functions of the communication apparatus 1100 by running or executing a software program stored in the memory 1102 and invoking data stored in the memory 1102.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store the software program for performing the solution in this application, and the processor 1101 controls the execution. For a specific implementation, refer to the foregoing method embodiment. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network device or communicate with another terminal. For another example, the communication apparatus 1100 is a network device, and the transceiver 1103 may be configured to communicate with a terminal or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, or combine some components, or have different component arrangements.

In addition, for technical effects of the communication apparatus 1100, refer to the technical effects of the method in the foregoing method embodiment. Details are not described herein again.

It should be understood that the processor in this embodiment of this application may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuits), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that a term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, a character "/" in this specification usually indicates an "or" relationship between associated objects, or may indicate an "and/or" relationship. A specific meaning depends on the context.

In this application, "at least one" means one or more, and "a plurality of" means two or more. In addition, "at least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel state information reporting method, applied to a first apparatus, wherein the method comprises:
receiving a reference signal from a second apparatus; and
sending first indication information to the second apparatus, wherein the first indication information indicates at least part of a plurality of first weighting coefficients associated with each first basis vector in a first basis and each second basis vector in a second basis; the first basis is determined by the first apparatus at a first moment based on the reference signal, the second basis is a basis reported by the first apparatus at a second moment, and the second moment is earlier than the first moment; and each of the at least part of first weighting coefficients corresponds to one priority, and a priority of a first weighting coefficient on a *(j* + 1)^{th} second basis vector in the second basis that is associated with an *(i* + 1)^{th} first basis vector in the first basis is determined based on one or more of the following: a quantity *M* of first basis vectors in the first basis, a quantity *M̃* of second basis vectors in the second basis, an index of the (*i* + 1)^{th} first basis vector in the first basis, or an index of the *(j* + 1)^{th} second basis vector in the second basis, wherein 0 ≤ *i < M,* 0 ≤ *j < M̃*, *M̃* ≤ *M*, and *M, M̃, i* and *j* all are integers.

2. A channel state information reporting method, applied to a second apparatus, wherein the method comprises:
receiving first indication information from a first apparatus, wherein the first indication information indicates at least part of a plurality of first weighting coefficients associated with each first basis vector in a first basis and each second basis vector in a second basis; the first basis is determined by the first apparatus at a first moment based on a reference signal, the second basis is a basis reported by the first apparatus at a second moment, and the second moment is earlier than the first moment; and each of the at least part of first weighting coefficients corresponds to one priority, and a priority of a first weighting coefficient on a *(j* + 1)^{th} second basis vector in the second basis that is associated with an (*i* + 1)^{th} first basis vector in the first basis is determined based on one or more of the following: a quantity *M* of first basis vectors in the first basis, a quantity *M̃* of second basis vectors in the second basis, an index of the (*i* + 1)^{th} first basis vector in the first basis, or an index of the (*j* + 1)^{th} second basis vector in the second basis, wherein 0 ≤ *i < M,* 0 ≤ *j < M̃*, *M̃* ≤ *M*, and *M, M̃, i* and *j* all are integers; and
determining the first basis based on the first indication information.

3. The method according to claim 1 or 2, wherein the priority of the first weighting coefficient on the *(j* + 1)^{th} second basis vector in the second basis that is associated with the (*i* + 1)^{th} first basis vector in the first basis is negatively correlated with a priority value of the first weighting coefficient on the (*j +* 1)^{th} second basis vector in the second basis that is associated with the (*i +* 1)^{th} first basis vector in the first basis; and the priority value of the first weighting coefficient on the (*j* + 1)^{th} second basis vector in the second basis that is associated with the (*i* + 1)^{th} first basis vector in the first basis satisfies one of the following relationships: $Pri \left(i, j\right) = {M}^{˜} i + f \left(j\right) ;$ or $Pri \left(i, j\right) = {M}^{˜} {i}^{2} + f \left(j\right) ,$ wherein
*Pri*(*i*, *j*) represents the priority value of the first weighting coefficient on the (*j* + 1)^{th} second basis vector in the second basis that is associated with the (*i* + 1)^{th} first basis vector in the first basis, and *f*(*j*) increases or decreases with *j.*

4. The method according to any one of claims 1 to 3, wherein the first indication information further indicates at least part of a plurality of second weighting coefficients and a third basis, and the second basis, the first weighting coefficients corresponding to the second basis, the third basis, and the at least part of second weighting coefficients are used to determine the first basis.

5. The method according to claim 4, wherein a priority of each of the second weighting coefficients is lower than a priority of any first weighting coefficient.

6. The method according to claim 4 or 5, wherein a priority of a second weighting coefficient on a (*k* + 1)^{th} third basis vector in the third basis that is associated with a first vector corresponding to the (*i* + 1)^{th} first basis vector in the first basis is related to a quantity of third basis vectors in the third basis, the first basis vector corresponding to the second weighting coefficient, and the third basis vector corresponding to the second weighting coefficient, wherein the first vector corresponding to the (*i* + 1)^{th} first basis vector comprises a difference between the *(i* + 1)^{th} first basis vector and a projection of the (*i* + 1)^{th} first basis vector on the second basis, and *k* is an integer.

7. The method according to claim 6, wherein the priority of the second weighting coefficient on the (*k* + 1)^{th} third basis vector in the third basis that is associated with the first vector corresponding to the *(i* + 1)^{th} first basis vector in the first basis is negatively correlated with a priority value of the second weighting coefficient on the (*k* + 1)^{th} third basis vector in the third basis that is associated with the first vector corresponding to the (*i* + 1)^{th} first basis vector in the first basis; and the priority value of the second weighting coefficient on the *(k* + 1)^{th} third basis vector in the third basis that is associated with the first vector corresponding to the (*i* + 1)^{th} first basis vector in the first basis satisfies the following relationship: $Pri \left(i, k\right) = K 1 ϕ \left(i\right) + f ′ \left(k\right) ,$ wherein
*Pri(i, k)* represents the priority value of the second weighting coefficient on the (*k +* 1)^{th} third basis vector in the third basis that is associated with the first vector corresponding to the (*i* + 1)^{th} first basis vector in the first basis, *K*1 is the quantity of third basis vectors in the third basis, *ϕ*(*i*) increases or decreases with *i, f*'(*k*) increases or decreases with *k,* 0 ≤ *i* < *M*, 0 ≤ *k* < *K*1, and *K*1 is an integer.

8. The method according to any one of claims 1 to 7, wherein the first basis vector is a spatial-domain basis vector, and the second basis vector is a spatial-domain basis vector; or
the first basis vector is a frequency-domain basis vector, and the second basis vector is a frequency-domain basis vector.

9. The method according to claim 4 or 5, wherein a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the *(i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis; and
the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis is related to one or more of the following: a quantity of spatial-domain basis vectors corresponding to the third basis, the total quantity of first basis vectors in the first basis, the frequency-domain basis vector corresponding to the second weighting coefficient, or the first basis vector corresponding to the second weighting coefficient, wherein the first vector corresponding to the (*i* + 1)^{th} first basis vector comprises a difference between the *(i* + 1)^{th} first basis vector and a projection of the (*i* + 1)^{th} first basis vector on the second basis, and both s and *f* are integers.

10. The method according to claim 9, wherein the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: $Pri \left(s, f, i\right) = LMπ \left(f\right) + Lϕ \left(i\right) + s ,$ wherein
*Pri(s, f , i)* represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis, *L* is the quantity of spatial-domain basis vectors corresponding to the third basis, *π*(*f*) is a function of *f, ϕ*(*i*) increases or decreases with *i*, 0 ≤ *f < F, F* is a quantity of frequency-domain basis vectors corresponding to the third basis, 0 ≤ *s < L,* and both *L* and *F* are integers.

11. The method according to claim 4 or 5, wherein a priority of a second weighting coefficient on a third basis vector that corresponds to an (*s* + 1)^{th} spatial-domain basis vector and an (*f* + 1)^{th} frequency-domain basis vector in the third basis and that is associated with a first vector corresponding to the (*i* + 1)^{th} first basis vector in the first basis is negatively correlated with a priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis; and
the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *i*^{th} first basis vector in the first basis is related to one or more of the following: a quantity of spatial-domain basis vectors corresponding to the third basis, the frequency-domain basis vector corresponding to the second weighting coefficient, the first basis vector corresponding to the second weighting coefficient, or a quantity of frequency-domain basis vectors corresponding to the third basis, wherein the first vector corresponding to the (*i* + 1)^{th} first basis vector comprises a difference between the *(i* + 1)^{th} first basis vector and a projection of the *(i* + 1)^{th} first basis vector on the second basis, and both s and *f* are integers.

12. The method according to claim 10, wherein the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the (*i* + 1)^{th} first basis vector in the first basis satisfies the following relationship: $Pri \left(s, f, i\right) = LFϕ \left(i\right) + Lπ \left(f\right) + s ,$ wherein
*Pri*(*s, f , i*) represents the priority value of the second weighting coefficient on the third basis vector that corresponds to the (*s* + 1)^{th} spatial-domain basis vector and the (*f* + 1)^{th} frequency-domain basis vector in the third basis and that is associated with the first vector corresponding to the *(i* + 1)^{th} first basis vector in the first basis, *L* is the quantity of spatial-domain basis vectors corresponding to the third basis, *π*(*f*) is a function of *f, ϕ*(*i*) increases or decreases with *i*, 0 ≤ *f < F, F* is the quantity of frequency-domain basis vectors corresponding to the third basis, 0 ≤ *s < L,* and both *L* and *F* are integers.

13. The method according to any one of claims 1 to 5, claim 7, or any one of claims 9 to 12, wherein the first basis vector is a spatial-frequency basis vector, and the second basis vector is a spatial-frequency basis vector.

14. A channel state information reporting method, applied to a first apparatus, wherein the method comprises:
receiving, by the first apparatus, a reference signal from a second apparatus; and
sending, by the first apparatus, second indication information to the second apparatus, wherein the second indication information indicates at least part of quantization information of a plurality of superposition coefficient differences based on *G* fourth basis vectors, the plurality of superposition coefficient differences comprise a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis comprises at least part of spatial-frequency basis vectors in a spatial-frequency basis determined based on the reference signal, the fourth moment is earlier than the third moment, and *G* is an integer greater than 0; and the at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a *(g* + 1)^{th} fourth basis vector that is associated with an *l*^{th} plurality of superposition coefficient differences among the plurality of superposition coefficient differences is related to *G* and a quantity of transport layers reported by the first apparatus or a quantity of antenna ports of the first apparatus, wherein 0 ≤ *g* < G, 1 ≤ *l* ≤ *v, v* represents the quantity of transport layers reported by the first apparatus or the quantity of antenna ports of the first apparatus, and *g*, *l* and *v* all are integers.

15. A channel state information reporting method, applied to a second apparatus, wherein the method comprises:
sending a reference signal to a first apparatus;
receiving second indication information from the first apparatus, wherein the second indication information is determined by the first apparatus based on the reference signal, the second indication information indicates at least part of quantization information of a plurality of superposition coefficient differences based on *G* fourth basis vectors, the plurality of superposition coefficient differences comprise a difference between a first superposition coefficient corresponding to each spatial-frequency basis vector in a first spatial-frequency basis at a third moment and a first superposition coefficient corresponding to each spatial-frequency basis vector in the first spatial-frequency basis at a fourth moment, the first spatial-frequency basis comprises at least part of spatial-frequency basis vectors in a spatial-frequency basis determined based on the reference signal, the fourth moment is earlier than the third moment, and *G* is an integer greater than 0; and the at least part of the quantization information of the plurality of superposition coefficient differences based on the *G* fourth basis vectors is related to priorities of the quantization information of the plurality of superposition coefficient differences based on the *G* fourth basis vectors, and a priority of quantization information on a *(g* + 1)^{th} fourth basis vector that is associated with a superposition coefficient difference corresponding to an *l*^{th} transport layer or antenna port of the first apparatus among the plurality of superposition coefficient differences is related to *G* and a quantity of transport layers reported by the first apparatus or a quantity of antenna ports of the first apparatus, wherein 0 ≤ *g* < *G*, 1 ≤ *l* ≤ *v, v* represents the quantity of transport layers reported by the first apparatus or the quantity of antenna ports of the first apparatus, and *g*, *l* and *v* all are integers; and
determining the plurality of superposition coefficient differences based on the second indication information.

16. The method according to claim 14 or 15, wherein the priority of the quantization information on the *(g* + 1)^{th} fourth basis vector that is associated with the superposition coefficient difference corresponding to the *l*^{th} transport layer or antenna port of the first apparatus among the plurality of superposition coefficient differences is negatively correlated with a priority value of the quantization information on the *(g* + 1)^{th} fourth basis vector that is associated with the superposition coefficient difference corresponding to the *l*^{th} transport layer or antenna port of the first apparatus among the plurality of superposition coefficient differences; and the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences satisfies one of the following relationships: $Pri \left(l, g\right) = vg + l ;$ $Pri \left(l, g\right) = 2 vg + l ;$ or $Pri \left(l, g\right) = {vg}^{2} + l ,$ wherein
*l* represents an index of a transport layer or an antenna port of the first apparatus, and *Pri*(*l, g*) represents the priority value of the quantization information on the *(g* + 1)^{th} fourth basis vector that is associated with the superposition coefficient difference corresponding to the *l*^{th} transport layer or antenna port of the first apparatus among the plurality of superposition coefficient differences.

17. The method according to any one of claims 14 to 16, wherein the second indication information further indicates second superposition coefficients corresponding to at least part of spatial-frequency basis vectors in a second spatial-frequency basis, the second spatial-frequency basis comprises a spatial-frequency basis vector, other than the first spatial-frequency basis, in the spatial-frequency basis determined based on the reference signal, and the second superposition coefficients corresponding to the at least part of spatial-frequency basis vectors in the second spatial-frequency basis are determined based on a priority of a second superposition coefficient corresponding to each spatial-frequency basis vector in the second spatial-frequency basis.

18. The method according to claim 17, wherein the priorities of the quantization information of the plurality of superposition coefficient differences based on the *G* fourth basis vectors all are higher than a priority of any one of the second superposition coefficients corresponding to the at least part of spatial-frequency basis vectors in the second spatial-frequency basis.

19. The method according to claim 17 or 18, wherein a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a second superposition coefficient corresponding to a spatial-frequency vector comprising a *k_{f}*^{th} frequency-domain basis vector and a *kₛ*^{th} spatial-domain basis vector on the *l*^{th} transport layer or antenna port of the first apparatus in the second spatial-frequency basis satisfies the following relationship: $Pri \left(l, {k}_{s}, {k}_{f}\right) = {vK}_{s} {k}_{f} + {υk}_{s} + l ,$ wherein
*l* represents the index of the transport layer or the antenna port of the first apparatus, *Pri*(*l*, *kₛ, k_{f}*) represents a priority value of a superposition coefficient corresponding to a spatial-frequency basis vector comprising a *kₛ*^{th} spatial-domain basis vector in a spatial-domain basis between the first apparatus and the second apparatus and a *k_{f}*^{th} frequency-domain basis vector in a frequency-domain basis between the first apparatus and the second apparatus, *Kₛ* is a quantity of spatial-domain basis vectors, and *kₛ, k_{f}* and *Kₛ* all are integers.

20. The method according to claim 17 or 18, wherein a priority of a second superposition coefficient corresponding to a spatial-frequency basis vector in the second spatial-frequency basis is negatively correlated with a priority value of the second superposition coefficient corresponding to the spatial-frequency basis vector in the second spatial-frequency basis; and a priority value of a superposition coefficient corresponding to a *(q* + 1)^{th} spatial-frequency basis vector on the *l*^{th} transport layer or antenna port of the first apparatus in the second spatial-frequency basis satisfies the following relationship: $Pri \left(l, q\right) = gv + l ,$ wherein
*l* represents the index of the transport layer or the antenna port of the first apparatus, *Pri*(*l*, *q*) represents the priority value of the superposition coefficient corresponding to the (*q* + 1)^{th} spatial-frequency basis vector on the *l*^{th} transport layer or antenna port of the first apparatus in the second spatial-frequency basis, and *q* is an integer.

21. The method according to claim 2 or 15, wherein the second apparatus comprises a central unit CU and/or a distributed unit DU, or the second apparatus is an open central unit O-CU and/or an open distributed unit O-DU.

22. A communication apparatus, wherein the communication apparatus is configured to perform the channel state information reporting method according to any one of claims 1 to 21.

23. A communication apparatus, comprising a processor and a memory, wherein the memory is configured to store computer instructions, and when the processor executes the instructions, the communication apparatus is caused to perform the channel state information reporting method according to any one of claims 1 to 21.

24. A communication apparatus, comprising a processor and an interface circuit, wherein
the interface circuit is configured to receive code instructions and transmit the code instructions to the processor; and
the processor is configured to run the code instructions to perform the channel state information reporting method according to any one of claims 1 to 21.

25. A communication apparatus, wherein the communication apparatus comprises a processor and a transceiver, the transceiver is configured to exchange information between the communication apparatus and another communication apparatus, and the processor executes program instructions, to perform the channel state information reporting method according to any one of claims 1 to 21.

26. The communication apparatus according to any one of claims 22 to 25, wherein the communication apparatus is a chip.

27. A computer-readable storage medium, wherein the computer-readable storage medium comprises a computer program or instructions, and when the computer program or the instructions are run on a computer, the computer is caused to perform the channel state information reporting method according to any one of claims 1 to 21.

28. A computer program product, wherein the computer program product comprises a computer program or instructions, and when the computer program or the instructions are run on a computer, the computer is caused to perform the channel state information reporting method according to any one of claims 1 to 21.
